(19) Europäisches Patentamt
European Patent Office
Office européen des brevets

(11) **EP 3 072 201 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(21) Anmeldenummer: **14747940.6**

(22) Anmeldetag: **06.08.2014**

(51) Int Cl.:
*H02J 3/14* *(2006.01)*          *H02J 3/38* *(2006.01)*

(86) Internationale Anmeldenummer:
**PCT/EP2014/066921**

(87) Internationale Veröffentlichungsnummer:
**WO 2015/032572 (12.03.2015 Gazette 2015/10)**

(54) **VERFAHREN UND VORRICHTUNG ZUR ADAPTIVEN BETRIEBSFÜHRUNG FÜR EIN SPEICHERSYSTEM FÜR EIN FOTOVOLTAIKSYSTEM**

METHOD AND APPARATUS FOR ADAPTIVE MANAGEMENT FOR A MEMORY SYSTEM FOR A PHOTOVOLTAIC SYSTEM

PROCÉDÉ ET DISPOSITIF PERMETTANT LA GESTION ADAPTATIVE POUR UN SYSTÈME D'ACCUMULATION D'UN SYSTÈME PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2013 DE 102013217576**

(43) Veröffentlichungstag der Anmeldung:
**28.09.2016 Patentblatt 2016/39**

(73) Patentinhaber: **Robert Bosch GmbH**
**70442 Stuttgart (DE)**

(72) Erfinder: **SCHMIEGEL, Armin Uwe**
**22609 Hamburg (DE)**

(56) Entgegenhaltungen:
**DE-A1-102009 040 090      DE-A1-102011 115 189**
**DE-U1-202011 005 048      US-A1- 2011 115 292**

**Beschreibung**

Stand der Technik

Die vorliegende Erfindung bezieht sich auf ein Verfahren zur adaptiven Betriebsführung für ein Speichersystem für ein Fotovoltaiksystem, auf eine entsprechende Vorrichtung zur adaptiven Betriebsführung für ein Speichersystem für ein Fotovoltaiksystem, auf ein entsprechendes Fotovoltaiksystem sowie auf ein entsprechendes Computerprogrammprodukt.

Aktuell gibt es zwei Produktgruppen von Fotovoltaik-Speichersystemen: DCgekoppelte Speichersysteme oder AC-gekoppelte Speichersysteme. Alternative Topologien werden diskutiert. Diese Systeme speichern überschüssigen Solarstrom in eine Batterie ein. Die Batterie ist dabei in unterschiedlichen Verhältnissen in Reihe und/oder parallel geschaltet. Bei DC-gekoppelten Systemen bevorzugt man hohe Batteriespannungen, wodurch alle Module eines Speicherblocks in Reihe geschaltet sind, sodass die Gesamtbatteriespannung möglichst nah an der DC-Zwischenkreisspannung liegt. Bei AC-Systemen geht man ebenso vor, wobei man hier vermehrt Kombinationen aus parallel geschalteten Blöcken, die aus in Serie geschalteten Blöcken bestehen, verwendet.

Die grundlegende Funktionsweise ist in allen Fotovoltaik-Speichersystemen die gleiche. Wird Solarstrom produziert, werden zunächst die Verbraucher im Haushalt versorgt. Sobald die Fotovoltaik-Anlage einen Überschuss generiert, wird dieser dazu genutzt, die Batterie zu laden. Gegen Nachmittag ist die Batterie voll und weitere Überschüsse werden ins Netz eingespeist. Am Abend, wenn die Fotovoltaik-Leistung geringer ist, als der Haushaltsverbrauch, wird die Batterie entladen und dient so lange zur Versorgung der Lasten, bis die Batterie leer ist. Dann wird Strom aus dem Netz bezogen, bis am nächsten Morgen die Sonne wieder genug Strom produziert. Die gängigen Betriebsführungen berücksichtigen weder Systemineffizienzen noch eventuelle Änderungen am Stromnetz oder am Markt.

In Proceedings of the 16th Kassel symposium energy systems technology, 2011, beschreiben A. U. Schmiegel und A. Linhart eine wirtschaftlich optimierte Netzeinspeisung von lokalgespeichertem Strom. Die DE 10 2009 040 090 A1 offenbart ein Verfahren zum Vorherbestimmen des Energieverbrauchs einer Last auf Basis eines Referenzzeitraums und ein Vorherbestimmen von erzeugter Energie aufgrund von aktuellen Daten sowie ein diesbezügliches Steuern des Energieflusses.

Offenbarung der Erfindung

Vor diesem Hintergrund wird mit der vorliegenden Erfindung ein Verfahren zur adaptiven Betriebsführung für ein Speichersystem für ein Fotovoltaiksystem, weiterhin eine Vorrichtung zur adaptiven Betriebsführung für ein Speichersystem für ein, die dieses Verfahren verwendet, weiterhin ein entsprechendes Fotovoltaiksystem sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Ein Fotovoltaiksystem produziert elektrische Energie in Abhängigkeit von der Sonneneinstrahlung. Der Verbrauch der elektrischen Energie ist jedoch meist nicht direkt abhängig von der Sonneneinstrahlung. Um dies auszugleichen, kann das Fotovoltaiksystem über ein Energie-Speichersystem beziehungsweise eine Batterie verfügen. Durch das Speichersystem kann zu Zeiten hoher Sonneneinstrahlung und geringem Verbrauch zu viel zur Verfügung stehende elektrische Energie zwischengespeichert werden. Neben der Versorgung eines Hausnetzes mit elektrischer Energie durch das Fotovoltaiksystem kann überschüssiger Strom in das Stromnetz eingespeist werden. Dabei steht der Betreiber des Stromnetzes vor der Herausforderung, ein stabiles Stromnetz aufzubauen, welches genügend Energie zu jedem Zeitpunkt zur Verfügung stellt. Um dies zu gewährleisten, kann ein Leistungsbedarfsparameter dem Fotovoltaiksystem zur Verfügung gestellt werden, um die Netzeinspeisung bedarfsorientiert zu steuern. Bei einer adaptiven Betriebsführung des Fotovoltaiksystems bzw. des Speichersystems des Fotovoltaiksystems können verschiedene Betriebsmodi bestimmt werden, um daraus den für das Stromnetz günstigsten Betriebsmodus zu wählen. Unter einem Betriebsmodus können hierbei die verschiedenen Leistungsflüsse zwischen Solarmodul, Speichersystem, Hausnetz und Stromnetz verstanden werden. Um sowohl die Produktion von Strom über den Solargenerator als auch den Verbrauch des angeschlossenen Haushalts zu prognostizieren, wird auf statistische Werte aus der Vergangenheit zurückgegriffen. Somit sind keine zusätzlichen Daten von außen zuzuführen.

Es wird ein Verfahren zur adaptiven Betriebsführung für ein Speichersystem für ein Fotovoltaiksystem vorgestellt, wobei das Fotovoltaiksystem als Komponenten zumindest einen Solargenerator, das Speichersystem, ein Energie-Management-System sowie einen Haushaltsanschluss und einen Netzanschluss umfasst, wobei das Verfahren die folgenden Schritte aufweist:

Einlesen von aktuellen Kenndaten des Fotovoltaiksystems und von vorangegangenen Kenndaten des Fotovoltaiksystems, wobei die aktuellen Kenndaten Produktionswerte und/oder Verbrauchswerte und/oder einen Ladezustand des Speichersystems in einem aktuellen Zeitintervall repräsentieren, wobei die vorangegangenen Kenndaten Produktionswerte und/oder Verbrauchswerte und/oder einen Ladezustand in zumindest einem vorangegangenen Zeitintervall repräsentieren;

Erstellen einer Mehrzahl von Sätzen zukünftiger Kenndaten unter Verwendung eines stochastischen Modells, wobei ein Satz der zukünftigen Kenndaten je einen erwarteten Produktionswert und/oder einen erwarteten Verbrauchswert für zumindest ein zukünftiges Zeitintervall umfasst, wobei den erwarteten Produktionswerten und/oder den erwarteten Verbrauchswerten je ein Wahrscheinlichkeitswert zugeordnet wird;

Bestimmen einer Vielzahl möglicher Energieflüsse zwischen den Komponenten des Fotovoltaiksystems für das zumindest eine zukünftige Zeitintervall unter Verwendung der Mehrzahl von Sätzen zukünftiger Kenndaten und Bestimmen eines Erwartungswertes je Satz zukünftiger Kenndaten unter Verwendung eines Leistungsbedarfsparameters und der Vielzahl möglicher Energieflüsse; und Wählen eines Energieflusses aus der Vielzahl möglicher Energieflüsse für das zumindest eine zukünftige Zeitintervall, wobei eine Differenz des Erwartungswertes des Energieflusses und dem Mittelwert der Erwartungswerte der Vielzahl von Energieflüssen am kleinsten ist, wobei der Energiefluss die adaptive Betriebsführung bestimmt.

Unter einem Fotovoltaiksystem kann ein System verstanden werden, welches Licht Energie in elektrische Energie wandelt. Das Fotovoltaiksystem kann einen Solargenerator, ein Speichersystem sowie ein Energie-Management-System umfassen. Unter dem Solargenerator kann ein Fotovoltaik-Generator oder Solarmodul verstanden werden. Dabei kann unter dem Speichersystem ein Energie-Speichersystem, eine Batterie oder ein Akkumulator verstanden werden. Über den Haushaltsanschluss kann ein Haushalt mit elektrischer Energie versorgt werden. Über den Netzanschluss kann das Fotovoltaiksystem mit einem öffentlichen oder globalen Stromnetz verbunden werden. Über den Netzanschluss kann das Fotovoltaiksystem elektrische Energie in das öffentliche Stromnetz einspeisen oder von dort beziehen. Das Energie-Management-System kann ausgebildet sein, die Leistungsflüsse oder Energieflüsse zwischen den Komponenten des Fotovoltaiksystems zu steuern. Unter den Produktionsdaten kann eine Information oder ein Signal verstanden werden, welches eine von dem Solargenerator erzeugte elektrische Energie in einem Zeitintervall repräsentiert. Somit kann unter den Produktionswerten eine von dem Solargenerator bereitgestellte elektrische Leistung verstanden werden. Unter Verbrauchswerten kann eine in einem Zeitintervall verbrauchte elektrische Energie des an das Fotovoltaiksystem über den Haushaltsanschluss angeschlossenen Haushalts verstanden werden. Der Ladezustand des Speichersystems kann in einem Bereich zwischen null und der maximalen Kapazität des Speichersystems variieren. Unter dem zumindest einen zukünftigen Zeitintervall kann eine Zeitspanne innerhalb eines Zeitraums zwischen dem aktuellen Zeitpunkt und einem Zeitpunkt in der Zukunft der zwischen wenigen Stunden und ein, zwei oder drei oder mehr Tagen liegen kann verstanden werden. Unter einer adaptiven Betriebsführung kann eine bedarfsorientierte Betriebsführung oder eine auf eine globale Netzstabilität optimierte beziehungsweise angepasste Betriebsführung verstanden werden. Dabei kann unter einem Leistungsbedarfsparameter eine Kennzahl verstanden werden. Der Leistungsbedarfsparameter kann in unterschiedlichen Zeitintervallen variieren. Dabei kann der Leistungsbedarfsparameter an ein Bezahlsystem bzw. an einen monetären Ertrag als Kenngröße gekoppelt sein. Unter einem Erwartungswert kann eine Kenngröße verstanden werden, die eine elektrische Energie oder eine elektrische Leistung mit einem Leistungsbedarfsparameter kombiniert.

Ein Aspekt der vorgestellten Erfindung ist es, ein adaptives Verfahren und eine Wahrscheinlichkeitsverteilung für eine Prognose zu koppeln und eine stochastische Optimierung durchzuführen. Somit kann der Erwartungswert des Ertrages auf Basis einer adaptiv bestimmten Prognose optimiert werden. Vorteilhaft kann eine Ausführungsform des vorgestellten Verfahrens die Eigenschaften der Fotovoltaik-Anlage und des Hausverbrauches selber lernen und eventuelle Unschärfen in der Prognose bei der Regelung berücksichtigen.

In einer Ausführungsform können die Kenndaten eine am Solargenerator abrufbare Leistung $P_t$ und/oder eine in der Batterie gespeicherte Leistung und/oder von der Batterie abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, repräsentieren, wobei die aktuellen Kenndaten Daten zu einem aktuellen und/oder vergangenen Zeitintervall und die erwarteten Kenndaten Daten zu einem zukünftigen Zeitintervall in dem Beobachtungszeitraum repräsentieren. Durch die Kenndaten kann das Fotovoltaiksystem einfach beschrieben werden.

Ferner können im Schritt des Bestimmens die Vielzahl möglicher Energieflüsse unter Verwendung je eines einem Energiefluss zuordenbaren Wirkungsgrades bestimmt wird. Der Wirkungsgrad der Energieübertragung zwischen den einzelnen Komponenten des Fotovoltaiksystems bzw. der einzelnen Komponenten des Fotovoltaiksystems selbst kann die Menge der bereitgestellten elektrischen Energie beeinflussen. Dabei kann elektrische Energie in Wärme gewandelt werden. Der Übertragung von Leistung zwischen den einzelnen Komponenten des Fotovoltaiksystems bzw. einzelnen Komponenten des Fotovoltaiksystems kann ein Wirkungsgrad zugeordnet werden. Das Speichersystem kann über die Zeit die darin gespeicherte Energie verlieren oder verringern. Ein Wirkungsgrad kann diese Funktion über die Zeit abbilden.

In einem Schritt des Ausgebens kann ein Steuersignal ausgegeben werden. Dabei kann das Steuersignal ausgebildet sein, den Energiefluss beziehungsweise den Leistungsfluss zwischen den Komponenten des Fotovoltaiksystems entsprechend dem im Schritt des Wählens gewählten Energieflusses zu steuern. Über das Steuersignal kann der Energiefluss beziehungsweise die Energieflüsse zwischen den Komponenten des Fotovoltaiksystems gesteuert werden. Das Steuersignal kann die Verteilung der elektrischen Leistung beziehungsweise der elektrischen Energie in dem Fotovoltaiksystem steuern. Somit kann das Steuersignal geeignet sein, die entsprechende adaptive Betriebsführung zu implementieren oder das Fotovoltaiksystem entsprechend der adaptiven Betriebsführung zu steuern.

Günstig ist es auch, wenn der Schritt des Erstellens, der Schritt des Bestimmens und der Schritt des Wählens zumindest ein zweites Mal ausgeführt werden, um für zumindest ein weiteres zukünftiges Zeitintervall die adaptive Betriebsführung zu bestimmen. Durch ein wiederholtes Ausführen der Schritte des Verfahrens kann iterativ die Prognose beziehungsweise die Betriebsführung aktuell und für eine Mehrzahl zukünftiger Zeitintervalle angepasst werden.

In einer Ausführungsform können ferner der Schritt des Erstellens, der Schritt des Bestimmens und der Schritt des Wählens mehrmalig ausgeführt werden, um für eine Vielzahl zukünftiger Zeitintervalle die adaptive Betriebsführung zu bestimmen, wobei ein erster Teil der Vielzahl zukünftiger Zeitintervalle je eine erste Dauer und ein zweiter Teil der Vielzahl zukünftiger Zeitintervalle je eine zweite von der ersten Dauer abweichende Dauer aufweisen. Die zukünftigen Zeitintervalle bilden eine Prognose für die Betriebsführung. Dabei können die auf das aktuelle Zeitintervall folgenden Zeitintervalle eine kürzere Dauer aufweisen als die mehr in der Zukunft liegenden Zeitintervalle. Somit können Genauigkeit und Langzeitprognose verbunden werden. Somit kann besonders effizient auch ein größerer Beobachtungszeitraum abgedeckt werden.

Ferner kann im Schritt des Wählens des Energieflusses und/oder der adaptiven Betriebsführung ein Energiefluss zwischen den Komponenten des Fotovoltaiksystems für das zugeordnete Zeitintervall bestimmt werden. Die adaptive Betriebsführung kann den Energiefluss von dem Solargenerator zu dem Haushaltsanschluss, zu dem Netzanschluss sowie zu dem Speichersystem bestimmen. Die adaptive Betriebsführung kann den Energiefluss von dem Speichersystem zu dem Haushaltsanschluss sowie zu dem Netzanschluss bestimmen. Die adaptive Betriebsführung kann den Energiefluss von dem Netzanschluss zu dem Haushaltsanschluss sowie zu dem Speichersystem bestimmen. Die durch die adaptive Betriebsführung bestimmten Energieflüsse sorgen für elektrische Energie für elektrische Verbraucher am Haushaltsanschluss sowie für ein stabiles Stromnetz am Netzanschluss. Hierzu wird elektrische Energie in dem Speichersystem gepuffert.

Die vorliegende Erfindung schafft ferner eine Vorrichtung zur optimierenden Betriebsführung für ein Speichersystem für ein Fotovoltaiksystem, die ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird ein Fotovoltaiksystem mit einem Solargenerator und/oder einem Speichersystem und/oder einem Energie-Management-System und einer Vorrichtung zur adaptiven Betriebsführung für das Speichersystem vorgestellt.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Ein Aspekt der vorliegenden Erfindung ist das Berücksichtigen von Systemineffizienzen sowie eventuelle Änderungen am Markt. Somit kann bei einer Änderung der ökonomischen Rahmenbedingungen, wie beispielsweise Einspeisetarife oder Strombezugskosten, die Betriebsführung das System optimal betreiben und so zusätzliche Erträge realisieren, und das Netz stabiler machen. So kann die Realisierung von Arbitragegewinnen, die sich durch zeitlich variierende Stromtarife ergeben, ermöglicht werden. Gleichzeitig kann die Stabilität des Stromnetzes verbessert werden, beziehungsweise die Verfügbarkeit von elektrischer Energie entsprechend der Nachfrage verbessert werden. Es kann eine zeitliche Betrachtung der Leistungs- und Energieflüsse durchgeführt werden.

Diese kann mit der Verwendung einer Prognoseeinheit verbessert werden. Dabei kann das Energiemanagementsystem eine Produktions- und Verbrauchsvorhersage verwenden und auf Basis der zukünftigen Erträge entscheiden, wie das System zu steuern ist.

Dies kann als ein Aspekt des hier vorgestellten Verfahrens mit Hilfe eines adaptiven Verfahrens gelöst werden, wobei eine Wahrscheinlichkeitsverteilung für die Prognose verwendet werden kann und eine stochastische Optimierung durchgeführt werden kann. Es wird also nicht der Ertrag optimiert, sondern der Erwartungswert oder eine andere aus der Ertragswahrscheinlichkeit abgeleitete Größe des Ertrages auf Basis einer adaptiv bestimmten Prognose. Dabei kann die Frequenzhaltung des Stromnetzes unter Verwendung des Leistungsbedarfsparameters verbessert werden.

Als ein Aspekt des hier vorgestellten Verfahrens wird ein adaptives Verfahren mit einer stochastischen Optimierung gekoppelt. Vorteil eines solchen Vorgehens ist, dass das System die Eigenschaften einer Fotovoltaik-Anlage und des Hausverbrauches selber lernen kann und eventuelle Unschärfen in der Prognose bei der Regelung berücksichtigt werden können.

Die Erfindung wird nachstehend anhand der beigefügten Zeichnungen beispielhaft näher erläutert. Es zeigen:

Fig. 1      eine schematische Darstellung eines Fotovoltaiksystems gemäß einem Ausführungsbeispiel der vorliegenden Erfindung;

Fig. 2      eine schematische Darstellung eines Fotovoltaiksystems mit einem Speichersystem als DC-System;

Fig. 3a und 3b      eine schematische Darstellung eines Fotovoltaikspeichersystems als AC-System;

Fig. 4      eine schematische Darstellung eines Fotovoltaikspeichersystems als DC-System;

Fig. 5a      bis 5d eine schematische Darstellung einer Funktionsweise eines Fotovoltaiksystems gemäß einem Ausführungsbeispiel der vorliegenden Erfindung;

Fig. 6      eine Darstellung eines Fotovoltaik-Speichersystems mit DC-Topologie gemäß einem Ausführungsbeispiel der vorliegenden Erfindung;

Fig. 7      eine schematische Darstellung von Leistungsflüssen und Energieflüssen eines Fotovoltaik-Speichersystems gemäß einem Ausführungsbeispiel der vorliegenden Erfindung;

Fig. 8a bis 8b      eine Darstellung einer Produktionskurve eines Solargenerators gemäß einem Ausführungsbeispiel der vorliegenden Erfindung;

Fig. 9      eine Darstellung eines Vergleichs eines Ertrags bei einer optimalen gegenüber einer adaptiven Betriebsführung gemäß einem Ausführungsbeispiel der vorliegenden Erfindung;

Fig. 10a bis 10c      eine Darstellung von Kurvenverläufen von Energieflüssen bei Verwendung einer optimierenden Betriebsführung gemäß einem Ausführungsbeispiel der vorliegenden Erfindung;

Fig. 11      eine Darstellung von Kurvenverläufen von Energieflüssen bei Verwendung einer optimierenden Betriebsführung gemäß einem Ausführungsbeispiel der vorliegenden Erfindung;

Fig. 12a bis 12c      eine Darstellung von Kurvenverläufen von Energieflüssen bei Verwendung einer optimierenden Betriebsführung gemäß einem Ausführungsbeispiel der vorliegenden Erfindung;

Fig. 13      ein Ablaufdiagramm eines Verfahrens gemäß einem Ausführungsbeispiel der vorliegenden Erfindung; und

Fig. 14      ein Blockschaltbild einer Vorrichtung gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

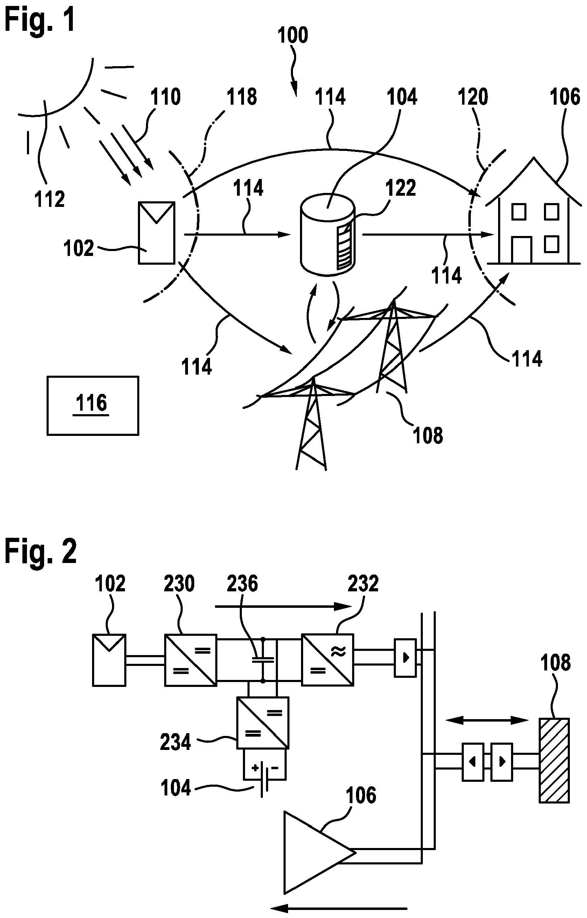

Fig. 1 zeigt eine schematische Darstellung eines Fotovoltaiksystems 100 gemäß einem Ausführungsbeispiel der vorliegenden Erfindung. Das Fotovoltaiksystem 100 umfasst zumindest einen Solargenerator 102, ein Speichersystem 104, einen Haushaltsanschluss 106 mit nicht dargestellten elektrischen Verbrauchern sowie einen Netzanschluss 108 zum Anschluss an ein globales Stromnetz. Der Solargenerator 102 ist ausgebildet, Licht 110 in der Sonne 112 in elektrische Energie zu wandeln und diese elektrische Energie im Fotovoltaiksystem 100 bereitzustellen. Pfeile zeigen einen möglichen Energiefluss 114 oder Leistungsfluss 114 zwischen den genannten Komponenten des Fotovoltaiksystems 100. Der Solargenerator 102 ist verbunden mit dem Haushaltsanschluss 106, dem Netzanschluss 108 sowie dem Speichersystem 104; somit ist ein Leistungsfluss 114 vom Solargenerator 102 zu dem Speichersystem 104, zu dem Haushaltsanschluss 106 sowie dem Netzanschluss 108 vorgesehen bzw. möglich. Das Speichersystem 104 ist weiterhin verbunden mit dem Haushaltsanschluss 106 sowie dem Netzanschluss 108. Das Speichersystem 104 ist ausgebildet, vom Solargenerator 102 oder über den Netzanschluss 108 bereitgestellte elektrische Energie zu speichern sowie an den Haushaltsanschluss 106 sowie den Netzanschluss 108 gespeicherte elektrische Energie abzugeben. Der Netzanschluss 108 ist weiterhin verbunden mit dem Haushaltsanschluss 106 und ausgebildet einen Leistungsfluss 114 vom Netzanschluss 108 zum Haushaltsanschluss 106 zu ermöglichen. Das Fotovoltaiksystem 100 weist weiterhin ein Energie-Management-System 116 auf, welches ausgebildet ist, die Leistungsflüsse 114 zwischen den Komponenten des Fotovoltaiksystems 100 zu steuern. Weiterhin ist das Energie-Management-System 116 ausgebildet, die Produktionsdaten 118 des Solargenerators 102, die Verbrauchswerte 120 am Haushaltsanschluss 106 sowie den Ladezustand 122 des Speichersystems 104 zu überwachen.

In einem Ausführungsbeispiel weist das Energie-Management-System 116 eine nicht dargestellte Prognoseeinheit auf. Dabei wird unter der nicht dargestellten Prognoseeinheit eine Vorrichtung verstanden, die das adaptive Verfahren zur Ermittlung einer Prognose durchführt.

Fig. 2 zeigt eine schematische Darstellung eines Fotovoltaiksystems 100 mit einem Speichersystem 104. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234 sowie ein Speichersystem 104. Der Solargenerator 102 ist über den Fotovoltaik-Laderegler 230 mit dem Wechselrichter 232 verbunden. Das über den Batterieladeregler 234 angebundene Speichersystem 104 greift in der Verbindung zwischen dem Fotovoltaik-Laderegler 230 und dem Wechselrichter 232 in das System ein. Zwischen den beiden Verbindungsleitungen zwischen dem Fotovoltaik-Laderegler 230 und dem Wechselrichter 232 ist ein Kondensator 236 angeordnet. Der Wechselrichter 232 ist über einen Übergabepunkt mit dem Haushaltsanschluss 106 sowie dem Netzanschluss 108 verbunden, wobei auch der Netzanschluss 108 über einen dedizierten Übergabepunkt angebunden ist.

Der Fotovoltaik-Laderegler 230 kann als ein MPP-Tracker verstanden werden, der ausgebildet ist, die Belastung des Solargenerators 102 für optimale Energieausbeute zu optimieren. Der Fotovoltaik-Laderegler 230 ist ausgebildet, den Solargenerator 102 im Leistungsmaximum oder Maximum Power Point zu betreiben. Unter einem Solargenerator 102 kann ein Solarmodul 102 oder eine Solarzelle 102 verstanden werden.

In dem in Fig. 2 dargestellten Ausführungsbeispiel fließt Strom von dem Solarmodul 102 über den Fotovoltaik-Laderegler 230 und dem Wechselrichter 232 in Richtung des Haushaltsanschlusses 106 sowie des Netzanschlusses 108. Somit kann der Haushaltsanschluss 106 von dem Solarmodul 102 bzw. dem Speichersystem 104 mit Strom versorgt werden sowie Strom über den Netzanschluss 108 eingespeist werden. Gleichzeitig oder alternativ kann der Haushalt Strom über den Netzanschluss 108 beziehen.

Gezeigt wird ein Betrieb eines AC-Systems. Der Wechselrichter 232 wird entsprechend der im Haushalt 106 vorhandenen Lasten geregelt und speist nur so viel Leistung ins Netz, wie aktuell verbraucht wird.

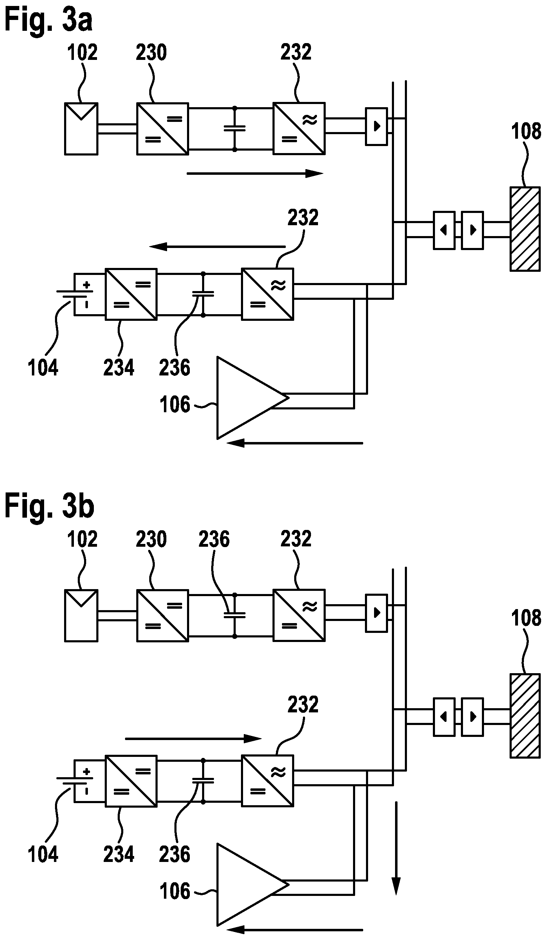

Fig. 3a und Fig. 3b zeigen eine schematische Darstellung eines Fotovoltaikspeichersystems 100 als DC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, zwei Wechselrichter 232, einen Batterieladeregler 234 sowie ein Speichersystem 104. Der Solargenerator 102 ist über den Fotovoltaik-Laderegler 230 mit dem ersten der zwei Wechselrichter 232 verbunden. Das Speichersystem 104 ist über den Batterieladeregler 234 mit dem zweiten der zwei Wechselrichter 232 verbunden. Die zwei Wechselrichter 232 der Haushaltsanschluss 106 sowie der Netzanschluss 108 sind miteinander verbunden. In Fig. 3a zeigen Pfeile den Zustand des Ladens des Fotovoltaiksystems 100 an. Im Vergleich dazu zeigen in Fig. 3b Pfeile den Eigenverbrauch bei einem Nulleinspeiser an. In Fig. 3a liefert der Solargenerator 102 Strom, welcher zum Speichersystem 104 sowie zum Haushaltsanschluss 106 geleitet wird. In Fig. 3b wird der Haushaltsanschluss 106 über das Speichersystem 104 mit Strom versorgt.

Der Eigenverbrauch erfolgt über die Be- und Entladung der Batterie unabhängig davon, ob im Haushalt Strom genutzt wird oder nicht. Die Entladung der Batterie erfolgt bei einem Nulleinspeiser darüber, dass Verbraucher direkt vom Speichersystem aus versorgt werden. Eine Auslegung als Volleinspeiser ist ebenso möglich. Dann ist der Betrieb analog zum DC-System zu sehen.

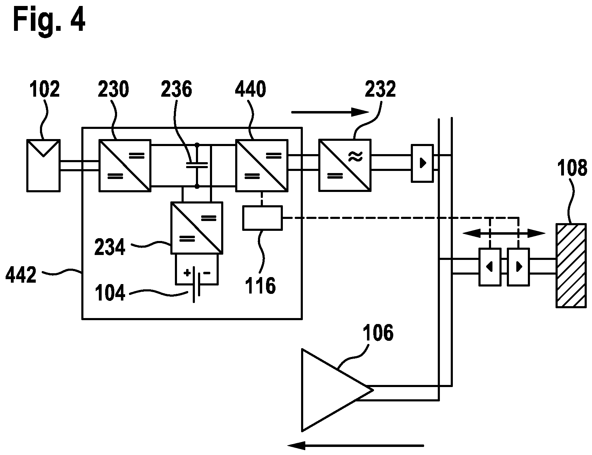

Fig. 4 zeigt eine schematische Darstellung eines Fotovoltaikspeichersystems als DC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234, ein Speichersystem 104 sowie einen virtuellen Solargenerator 440 bzw. virtuellen Fotovoltaik-Generator 440. Der Fotovoltaik-Laderegler 230 bildet zusammen mit dem virtuellen Solargenerator 440 sowie dem Batterieladeregler 234 dem Speichersystem 104 sowie einem Energie-Management-System 116 ein PV-DC-System 442. Der virtuelle Solargenerator 440 ist vor den Wechselrichter 232 geschaltet und wie der Übergabepunkt zum Netzanschluss 108 mit dem Energie-Management-System 116 verbunden.

Mit anderen Worten zeigt Fig. 4 eine schematische Darstellung eine PV-DC-Systems 442. Das System 442 wird zwischen einem Wechselrichter 232 und einer PV-Anlage bzw. einem Solargenerator 102 installiert. Das System 442 verfügt über einen eigenen MPP-Tracker 230, um den optimalen Arbeitspunkt des Solargenerators 102 einzustellen. Der Batterieladeregler 234 dient zur Be- und Entladung der Batterie 104. Der virtuelle Fotovoltaik-Generator 440, auch kürzer als virtueller PV-Generator 440 bezeichnet, erzeugt eine UI-Kennlinie, die einem PV-Generator mit einer Zielleistung entspricht, sodass der ursprüngliche Wechselrichter sich auf die Zielleistung einregelt.

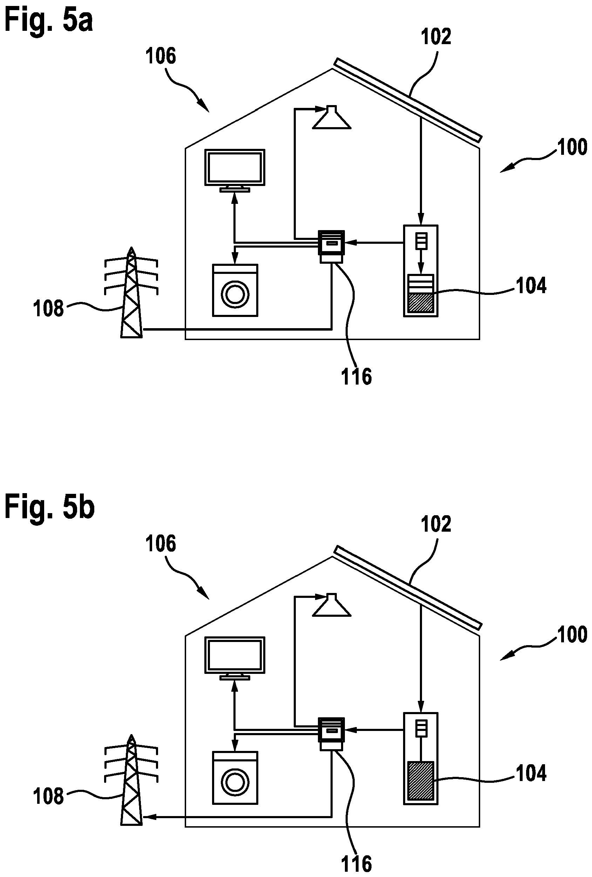

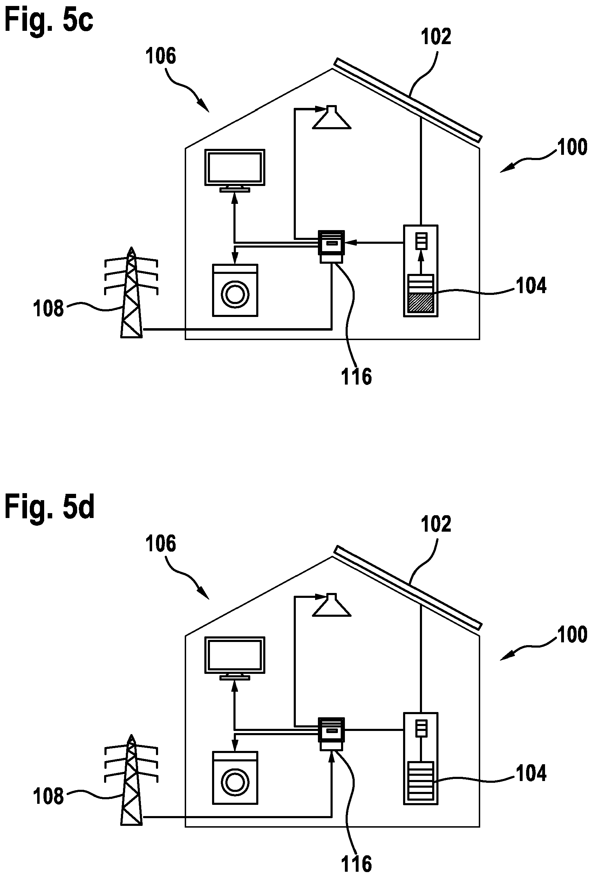

Fig. 5a bis 5d zeigen eine schematische Darstellung einer Funktionsweise eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Auf dem Dach eines Hauses ist ein Solargenerator 102 angeordnet. Ein Energie-Management-System 116 koppelt das Fotovoltaiksystem 100 den Haushaltsanschluss 106 mit seinen elektrischen Verbrauchern sowie den Netzanschluss 108 und steuert dabei das Fotovoltaiksystem 100 mit dem dort angeordneten Speichersystem 104. die Figuren 5a bis 5d zeigen die Funktionsweise zu verschiedenen Tageszeiten bzw. nachts. So zeigen beispielhaft Fig. 5a die Funktionsweise am Vormittag, Fig. 5b die Funktionsweise am Nachmittag, Fig. 5c die Funktionsweise am Abend sowie Fig. 5d die Funktionsweise während der Nacht. In Fig. 5a wird die im Fotovoltaik Generator 102 produzierte Energie vormittags zur Optimierung des Eigenverbrauchs genutzt. Überschüssige Energie wird zum Aufladen der integrierten Lithium-Ionen-Batterie 104 genutzt. Fig. 5b zeigt bei voll aufgeladen Batterien, dass das System den Eigenverbrauch versorgt und überschüssige Energie ins Stromnetz einspeist. Am Abend wird wie in Fig. 5c dargestellt nach Sonnenuntergangenergie aus der Batterie zur Verfügung gestellt. Bei dem gezeigten Ausführungsbeispiel sind Eigenverbrauchsquoten von 70 % und mehr zu erreichen. In Fig. 5d ist ein Zustand in der Nacht gezeigt, bei dem die Kapazität der Batterie nicht ausreicht, um den Eigenverbrauch abzudecken, sodass Strom aus dem öffentlichen Netz bezogen wird, um den Stromverbrauch zu decken.

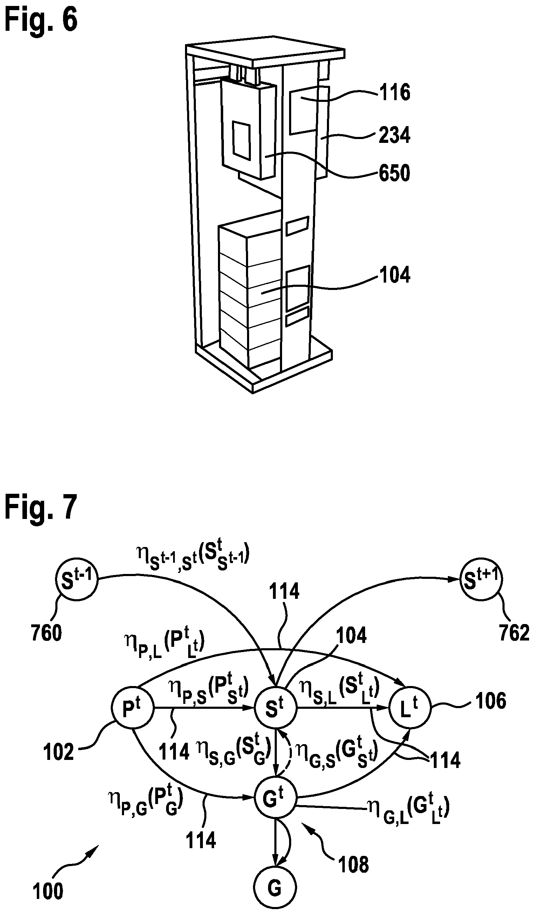

Fig. 6 zeigt eine Darstellung eines Fotovoltaik-Speichersystems mit DC-Topologie gemäß einem Ausführungsbeispiel der vorliegenden Erfindung. Das System umfasst ein Energiemanagementsystem 116 einen Batterieladeregler 234, einen Stringinverter 650 sowie ein Speichersystem 104, welches in dem gezeigten Ausführungsbeispiel als eine Lithium-Ionen-Batterie mit 4-6 Modulen à 2,2 kWh ausgebaut ist. Dabei umfasst das Speichersystem 104 weiterhin ein Batteriemanagementmodul, eine CanOpen-Buskommunikation sowie eine Einrichtung zum Schutz der Batterie.

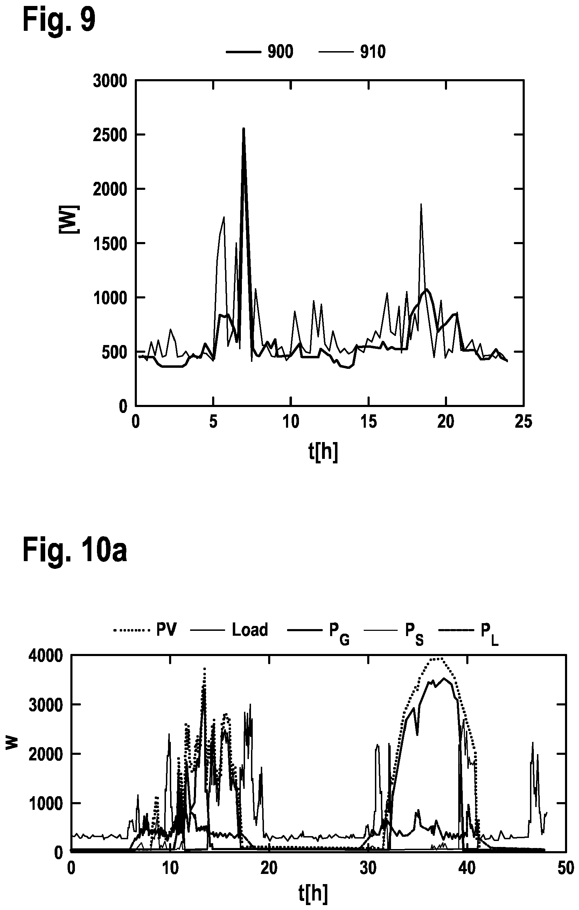

In Fig. 6 ist ein PV-Speichersystem 100 dargestellt. Das beispielsweise in Fig. 9 dargestellte Verfahren ist in einer Steuereinheit, hier dem Energie Management-System 116, integriert. Bei nicht integrierten Systemen kann diese Steuereinheit auch ein externes Gerät sein. Dabei ist es unerheblich, ob das System in unmittelbarer Nähe zum Gerät, oder über eine Kommunikationsverbindung an einem anderen Ort installiert ist. Zur Realisierung des Verfahrens muss sichergestellt sein, dass das Energie-Management-System Informationen zum aktuellen Verbrauch und zur Produktion erhält.

Fig. 7 zeigt eine schematische Darstellung von Leistungsflüssen 114 und Energieflüssen eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, ein Speichersystem 104, einen Haushaltsanschluss 106 sowie einen Netzanschluss 108. Zwischen den Komponenten des Fotovoltaiksystems 100 sind Leistungsflüsse 114 dargestellt. Die einzelnen Komponenten des Fotovoltaiksystems 100 sowie die Leistungsflüsse lassen sich mathematisch beschreiben.

Fig. 7 stellt die Leistungs- und Energieflüsse eines PV-Speichersystems dar. Produktion repräsentiert durch Produktionsdaten 118, und Haushaltsverbrauch, repräsentiert durch Verbrauchswerte 120, sowie der Energiefluss des Speichers 104 aus der Vorperiode 760, sind jeweils vorgegeben. Im Folgenden wird die Realisierung eines Ausführungsbeispiels eines erfindungsgemäßen Verfahrens beschrieben. Unabhängig von der verwendeten Topologie kann die Funktionsweise eines PV-Speichersystems 100 durch seine Leistungs- und Energieflüsse 114 beschrieben werden. In Fig. 7 ist der zugrunde liegende Graph dargestellt. Es werden in diesem Fall vier Knoten $P^t$, $S^t$, $L^t$, $G^t$ benötigt, die die verschiedenen Komponenten 102, 104, 106, 108 des Systems beschreiben:

$P^t$: Stellt die zum Zeitpunkt t am PV-Generator abrufbare Leistung dar.

$S^t$: Stellt die zum Zeitpunkt t in die Batterie gespeicherte oder aus der Batterie abrufbare Energie dar.

$L^t$: Entspricht der zum Zeitpunkt t benötigte Leistung zur Versorgung der Verbraucher in einem Haushalt.

$G^t$: Repräsentiert die Leistung, die in das Netz gespeist oder vom Netz abgerufen wird.

Da kein verlustfreier Leistungstransport möglich ist, müssen diese Verluste ebenfalls ins Model integriert werden. Dies erfolgt durch den jeweiligen Wirkungsgrad von $x$ nach $y$ und wird als $n_{x,y}(M)$ beschrieben. Dabei beschreibt M die Menge der transportierten Leistung. Es gilt

$$\eta_{x,y}(M) \in [0,1] \tag{1}$$

Im Rahmen der Modellierung wird vereinbart, dass die Leistungsverluste stets erst beim Energie- bzw. Leistungsempfänger berücksichtigt werden. Zur Erhaltung der Übersichtlichkeit wird das Argument $M$ in den folgenden Formeln nicht mitgeschrieben, wenn aus dem Zusammenhang ersichtlich ist, welche Leistungsmenge anzusetzen ist.

$P^t$ stellt die zum Zeitpunkt t bereitgestellte Leistung des PV-Generators dar. Grundsätzlich besteht die Möglichkeit nicht die gesamte mögliche Leistung in Anspruch zu nehmen, das heißt, der Wechselrichter kann die Leistung des PV-

Generators abregeln. $P_{S^t}^t$ ist der Leistungsfluss vom Generator zum Speicher, $P_{L^t}^t$ der Leistungsfluss vom Generator zu den Verbrauchern im Haushalt und $P_G^t$ den Leistungsfluss vom Generator ins Netz.

$$\left(P_{S^t}^t + P_{L^t}^t + P_G^t\right) \le P^t \tag{2}$$

Die Leistuns- und Energieflüsse zum Speicher werden wie folgt beschrieben:

$$\eta_{PS}\,P_{S^t}^t + \eta_{GS}G_{S^t}^t + \frac{\eta_{S^{t-1}S^t}S^{t-1}}{\Delta t} - \left(\frac{S^{t+1}}{\Delta t} + S_{G^t}^t + S_{L^t}^t\right) = 0 \tag{3}$$

Der Speicher erhält aus der PV-Anlage die Leistung $P_{S^t}^t$. Zusätzlich kann der Speicher aus dem Netz mit der Leistung $G_{S^t}^t$ geladen werden. Die Tatsache, dass ein Speicher bereits geladen sein kann, wird durch den dritten Term modelliert. $S^{t-1}$ stellt jene Energie dar, mit der der Speicher in der Vergangenheit geladen wurde. Der Wirkungsgrad $\eta_{S^{t-1}S}^t$ repräsentiert somit die Selbstentladung des Speichers. Die Entladung der Batterie kann zum darüber erfolgen, dass Leistung ins Netz eingespeist $S_{G^t}^t$ oder zur Deckung der Verbraucher $S_{L^t}^t$ verwendet wird. Der Rest der zur Verfügung stehenden Leistung wird in den zukünftigen Speicher $S^{t+1}$ überführt.

Der Hausverbrauch ist zum aktuellen Zeitpunkt $L^t$ voll zu decken. Dies kann durch Leistungsaufnahme aus dem Netz $G_{L^t}^t$, direkt aus der PV-Anlage $P_{L^t}^t$ oder dem Speicher $S_{L^t}^t$ geschehen:

$$L^t - \left(G_{L^t}^t + \eta_{PL}P_{L^t}^t + \eta_{SL}S_{L^t}^t\right) = 0 \tag{4}$$

Für den Netzknoten gilt, dass er jene Leistung aufnimmt oder abgibt, die vom Speicher, der PV-Anlage oder dem Haushalt eingespeist, bzw. aufgenommen wird. Er kann jeden beliebigen Wert annehmen, solange die Netzanschlussleistung $AC_{max}$ nicht überschritten wird. Es gilt

$$-AC_{max} \le \eta_{P,G}P_G^t + \eta_{S,G}S_{G^t}^t - G_{L^t}^t - G_{S^t}^t \le AC_{max} \tag{5}$$

Dabei kann auf vertragliche, gesetzliche oder technische Aspekte Rücksicht genommen werden. Im folgenden wird, analog zum deutschen Energieeinspeisegesetz (EEG 2012) für PV-Anlagen, mit einer installierten Leistung bis 15kVA, angenommen, dass der Nettofluss am Anschlusspunkt nicht mehr als 70% der installierten Leistung $P_{inst}$ betragen darf. Aus diesem Grund muss die Gleichung für die Anschlussbedingung (5) modifiziert werden:

$$-AC_{max} \le \eta_{P,G}P_G^t + \eta_{S,G}S_{G^t}^t - G_{L^t}^t - G_{S^t}^t \le 70\%P_{inst} \tag{6}$$

Die Flussgleichungen zum Zeitpunkt t lassen sich somit folgend zusammenfassen: für die Produktionsgleichung $P_{S^t}^t + P_{L^t}^t + P_G^t \le \tilde{P}^t$, für die Speichergleichung $\eta_{PS}\,P_{S^t}^t + \eta_{GS}G_{S^t}^t + \frac{\eta_{S^{t-1}S^t}S^{t-1}}{\Delta t} - \left(\frac{S^{t+1}}{\Delta t} + S_{G^t}^t + S_{L^t}^t\right) = 0$, für die Verbrauchsgleichung $\bar{L}^t - \left(G_{L^t}^t + \eta_{PL}P_{L^t}^t + \eta_{SL}S_{L^t}^t\right) = 0$ sowie für die Netzgleichung $-AC_{max} \le \eta_{P,G}P_G^t + \eta_{S,G}S_{G^t}^t - G_{L^t}^t - G_{S^t}^t \le 70\%P_{inst}$.

Für die Knoten gelten unterschiedliche Wertebereiche. Die Fotovoltaik-Produktion ist positiv, aber auf die Größe der Fotovoltaik-Anlage $PV_{max}$ [kW] limitiert.

$$P^t \in [0, PV_{\max}] \tag{7}$$

Auch die Speicherkapazität ist stets positiv, hier liegt die Limitierung an der Gesamtkapazität $K_S$[kWh].

$$S^t \in [0, K_S] \tag{8}$$

Es wird angenommen, dass keine weiteren Erzeugungseinheiten im Haushalt vorhanden sind, d. h. keine weiteren PV-Anlagen oder kleinere Blockheizkraftwerke. In diesem Fall gilt für den Verbrauch lediglich:

$$L^t \geq 0 \tag{9}$$

Mit diesen Angaben ist das mathematische Problem vollständig beschrieben. Zur Lösung zu einem bestimmten Zeitpunkt t, sind lediglich die aktuelle PV-Produktion, der Verbrauch, sowie der aus der Vergangenheit stammende Wert für den Speicherinhalt noch notwendig.

Die Stromnetze müssen entsprechend der Nachfrage Strom bereitstellen können. Hierzu muss genug Strom produziert beziehungsweise bereitgestellt werden. Ein Wert, die Angebot und Nachfrage beschreibt, kann als Leistungsbedarfsparameter bezeichnet werden. Es zeigt sich, dass die Entlohnung für eingespeisten Strom, das heißt, also die Einspeisevergütung und auf der anderen Seite die Strombezugskosten ein idealer Wert als Leistungsbedarfsparameter sind. Somit bietet eine wirtschaftliche Optimierung gleichzeitig eine technische Optimierung entsprechend Angebot und Nachfrage beziehungsweise zur Herstellung eines stabilen Stromnetzes.

Für wirtschaftliche Optimierung der Betriebsführung ist es notwendig, die dargestellten Leistungs- und Energieflüsse monetär zu bewerten. So kann eine Entscheidung über die Verteilung der zur Verfügung stehenden Leistung getroffen werden. Die Entscheidung über einen bestimmten Leistungsfluss wird für ein bestimmtes Zeitintervall $\Delta t$ getroffen. Hieraus ergibt sich eine Energiemenge, die transferiert wird.

Die Kosten und Einnahmen für die verschiedenen Leistungs- und Energieflüsse lassen sich einzeln darstellen. Kosten entstehen zum einen durch Leistungsverluste und zum anderen durch den Ankauf von Strom. Die Leistungsverluste sind in einen konstanten Anteil $v_{x,y}$ und in einen in $P_Y$ linearen Anteil $\kappa_{X,Y}$ aufgeteilt. Alternativ kann hier auch noch ein in $P_Y$ nichtlinearer Anteil verwendet werden. In diesem Fall handelt es sich um ein nichtlineares Optimierungsproblem.

Eine Besonderheit stellt die Kostenbewertung von $G_S^t$ dar. Hier werden die Stromkosten zweifach bewertet. Dies wird notwendig, da ansonsten die vermiedenen Stromkosten, die bei einer Endladung der Batterie als Gewinn bewertet würden, die Stromkosten beim Laden der Batterie kompensieren würden. Diese fehlerhafte Verrechnung von Opportunitätskosten mit realen Kosten macht die zweifache Bewertung notwendig.

Für den Leistungsfluss $P_G^t$ können die Kosten mit $-c_i^t(v_{PG} + \kappa_{PG} P_G^t)\Delta t$ und die Einnahmen mit $c_i^t P_G^t \Delta t$ angesetzt werden. Für den Leistungsfluss $P_S^t$ können die Kosten mit $-c_{gc}^t(v_{PS} + \kappa_{PS} P_S^t)\Delta t$ angesetzt werden. Für den Leistungsfluss $P_L^t$ können die Kosten mit $-c_{gc}^t(v_{PL} + \kappa_{PL} P_L^t)\Delta t$ und die Einnahmen mit $c_{gc}^t P_L^t \Delta t$ angesetzt werden. Für den Leistungsfluss $S_L^t$ können die Kosten mit $-c_{gc}^t(v_{SL} + \kappa_{SL} S_L^t)\Delta t$ und die Einnahmen mit $c_{gc}^t S_L^t \Delta t$ angesetzt werden. Für den Leistungsfluss $S_G^t$ können die Kosten mit $-c_i^t(v_{SG} + \kappa_{SG} S_G^t)\Delta t$ und die Einnahmen mit $c_i^t S_G^t \Delta t$ angesetzt werden. Für den Leistungsfluss $S^{t+1}$ können die Kosten mit $-c_{gc}^t(v_{SS} + \kappa_{SS} S^{t+1})$ und die Einnahmen mit $c_{gc}^t S_L^t$ angesetzt werden. Für den Leistungsfluss $G_L^t$ können die Kosten mit $-c_{gc}^t G_L^t \Delta t$ angesetzt werden. Für den Leistungsfluss $G_S^t$ können die Kosten mit $-c_{gc}^t(v_{GS} + (2 + \kappa_{GS})G_S^t)\Delta t$ angesetzt werden.

Die dargestellten Flussgleichungen werden in eine verallgemeinerte Form gebracht. Hierzu wird zunächst ein Zustandsvektor $x^t$ definiert, der die Leistungs- und Energieflüsse zusammenfasst:

$$x^t = (P_G^t, P_S^t, P_L^t, S_L^t, S_G^t, S^{t+1}, G_L^t, G_S^t) \tag{10}$$

Der Zustand wird durch den zeitanhängigen Parameter $y^t$ beeinflusst:

$$y^t = \left( \tilde{P}^t, \tilde{L}^t, c_{in}^t, c_{gc}^t \right) \tag{11}$$

Die Flussgleichungen lassen sich als lineare Un-Gleichunen formulieren:

$$M_{lg} x^t \leq \begin{pmatrix} y_1^t \\ 70\% P_{inst} \end{pmatrix} \tag{12}$$

$M_{lg}$ fasst die "kleiner gleich" Ungleichungen aus der Beschreibung der Leistungsflüsse zusammen:

$$M_{lg} = \begin{pmatrix} 1 & 1 & 1 & 0 & 0 & 0 & 0 & 0 \\ \eta_{PG} & 0 & 0 & 0 & \eta_{SG} & 0 & -1 & -1 \end{pmatrix} \tag{13}$$

$y_1^t$ steht hierbei für die erste Komponente des Parametervektors. Für die "gleich" Gleichungen gilt dann

$$M_{gq} x^t = \begin{pmatrix} \dfrac{x_{SS}^{(t-1)} \eta_{SS}}{\Delta t} \\ y_2^t \end{pmatrix} \tag{14}$$

mit

$$M_{gq} = \begin{pmatrix} 0 & \eta_{PS} & 0 & -1 & -1 & \frac{1}{\Delta t} & 0 & \eta_{GS} \\ 0 & 0 & \eta_{PL} & \eta_{SL} & 0 & 0 & 1 & 0 \end{pmatrix}. \tag{15}$$

Die "größer gleich" gilt dann

$$M_{gg} x^t \geq (-AC_{max}) \tag{16}$$

mit

$$M_{gg} = \begin{pmatrix} \eta_{PG} & 0 & 0 & 0 & \eta_{SG} & 0 & -1 & -1 \end{pmatrix}. \tag{17}$$

Weiterhin gelten noch die Randbedingungen $\forall i: x_i^t \geq 0$ und die Begrenzung der Speicherkapazität der Batterie $x_6^t \leq K_{Batt}$ wobei $K_{Batt}$[kWh] die Gesamtkapazität darstellt.

Die Ertragsfunktion $K^t$ lautet

$$K^t = \sum_j \gamma_j^t(y^t) x_j^t + \omega_j^t \tag{18}$$

$\gamma^t$ fasst die in $x_j^t$ linearen Terme der Erträge der Leistungs- und Energieflüsse zusammen:

$$\gamma^t = \begin{pmatrix} (c_i^t(\kappa_{PG}-1)\Delta t & c_{gc}^t(-\kappa_{PS})\Delta t & c_{gc}^t(1-\kappa_{PL})\Delta t & c_{gc}^t(1-\kappa_{SL})\Delta t & \cdots \\ c_i^t(1-\kappa_{SG})\Delta t & -c_{gc}^t\kappa_{SS} & -c_{gc}^t\Delta t & -c_{gc}^t(2+\kappa_{GS})\Delta t \end{pmatrix} \tag{19}$$

$\omega_j^t$ fasst die konstanten Verlustterme der Flüsse zusammen:

$$\omega_j^t = \begin{pmatrix} -c_i^t v_{PG}\Delta t & -c_{gc}^t v_{PS}\Delta t & -c_{gc}^t v_{PL}\Delta t - c_{gc}^t v_{SL}\Delta t & ... \\ -c_i^t v_{SG}\Delta t & c_{gc}^t v_{SS} & 0 & -c_{gc}^t v_{GS}\Delta t \end{pmatrix} \quad (20)$$

Mit diesen Formulierungen kann die Betriebsführung als Lösung eines linearen Programms interpretiert werden. Diese Formulierung erlaubt es, die effizienz- und marktgesteuerte Betriebsführung zu realisieren.

Die hier vorgestellte global optimierende Betriebsführung löst das lineare Programm für alle Zeitpunkte t gleichzeitig, d. h. in voller Kenntnis der zukünftigen Produktions- und Verbrauchsverläufe. Die Optimierungsaufgabe lautet:

$$\max_{x^i} \sum_{n=0}^{M-1} K^{t+n\Delta t}\left(x^{t+n\Delta t}, y^{t+n\Delta t}\right) \quad (21)$$

Die in Gleichung (21) verwenden Zustandsgrößen und Randbedingungen lassen sich zu jeweils einem Vektor zusammenfassen:

$$\tilde{x} = \{x^1, x^2, ..., x^M\} \quad (22)$$

$$\tilde{y} = \{y^1, y^2, ..., y^M\} \quad (23)$$

Hierdurch vereinfacht sich das Optimierungsproblem zu:

$$\max_{\tilde{x}} K(\tilde{x}, \tilde{y}) \quad (24)$$

Die global optimierende Betriebsführung stellt somit bei einer vorgegebenen Menge an Verläufen $\tilde{y}$ die bestmögliche Betriebsführung dar.

Da bei der global optimierenden Betriebsführung die zukünftigen realisierten Erträge aus der Betriebsführung bekannt sind, besteht hier keine Notwendigkeit den Wert der gespeicherten Energie abzuschätzen. Aus diesem Grund wird dem Speicherinhalt auch kein Wert zugeordnet:

$$\gamma_6^t = -c_{gc}^t \kappa_{SS} \quad (25)$$

Da mit einer relativ hohen zeitlichen Auflösung gearbeitet, ist es notwendig, den Zeithorizont bei der Berechnung der globalen Optimierung zu begrenzen. Auf diese Weise kann auch sichergestellt werden, dass Fehlprognosen korrigiert werden können. Dabei wird für einen begrenzten Zeithorizont das lineare Programm komplett gelöst und der Speicherinhalt an das lineare Programm der Folgeperiode übergeben.

Eine global optimierende Betriebsführung entspricht einer Betriebsführung, die mit Kenntnis sämtlicher Produktions- und Verbrauchsverläufe arbeitet. Für eine Umsetzung würden Prognoseverfahren benötigt, deren Vorhersage jedoch mit Prognosefehlern behaftet ist. Bei der Prognose der Solarstromproduktion von einzelnen Anlagen liegt der relative Prognosefehler bei ca. 40%. Bei der Vorhersage des Verbrauches eines einzelnen Haushaltes existieren Verfahren, die eine Genauigkeit von 5-10% erlauben. Daher wird hier ein Verfahren beschrieben, dass mithilfe der "stochastischen Programmierung" eine Betriebsführung realisiert, die keine Kenntnisse über die zukünftige Produktion und Verbrauch benötigt, sondern die Produktion und den Verbrauch als stochastische Größen interpretiert, deren Verteilung bekannt ist, bzw. adaptiv ermittelt wird.

Stochastische Programmierung findet in verschiedenen Bereichen der Energiemärkte in Verbindung mit Speichern Anwendung. Beispielsweise wird die stochastische Programmierung genutzt, um die Betriebsführung und die Vermarktung von Pumpspeichern zu optimieren. Das allgemeine stochastische Optimierungsproblem lautet:

$$\max_{x\in X(\xi)} \mathbb{E}\left(f(x, \xi)\right) \quad (26)$$

Wobei $x \in \mathbb{R}^d$ eine kontinuierliche Endscheidungsvariable darstellt. Diese entsprechen dem Vektor der Leistungs- und Energieflüsse $x^t$, dessen Werte durch die Betriebsführung eingestellt werden sollen. $\xi$ stellt eine Zufallsvariable dar. Die Zufallsvariable $\xi$ entspricht der Produktion und dem Verbrauch. $X(\xi)$ stellt die Menge der erlaubten Zustände dar. Diese Menge wird durch die Energie- und Leistungsflussgleichungen, sowie durch die Randbedingungen beschrieben. f entspricht der Ertragsfunktion. Die Zielgröße ist hier der Erwartungswert $\mathbb{E}$, dieser entspricht der Realisierung in dem vorliegend beschriebenen Verfahren. Es ist jedoch in Ausführungsbeispielen möglich, andere Größen, wie den wahrscheinlichsten Wert der Verteilung, seine Varianz oder den Median zu verwenden.

Gleichung (26) stellt eine Formulierung für die Optimierung zu einem Zeitpunkt dar. Die Verallgemeinerung über mehrere Zeitpunkte liefert eine mehrstufige Formulierung des Optimierungsproblems:

$$\max_{x^0 \in X^0(\xi^0)} f^0(x^0) + \\ \mathbb{E}\left[\max_{x^1 \in X^1(x^0, \xi^1)} f^1(x^1, \xi^1) + \mathbb{E}\left[\ldots + \mathbb{E}\left[\max_{x^T \in X^T(x^{T-1}, \xi^T)} f^T(x^T, \xi^T)\right]\right]\right] \tag{27}$$

Es liegt hier eine Verschachtelung der Optimierungsaufgabe aus Gleichung (26) vor, d. h. für $x^{T-1}$ lautet das Problem:

$$\max_{x^{T-1} \in X^{T-1}(\xi^{T-1})} f^{T-1}(x^{T-1}) + \mathbb{E}\left[\max_{x^T \in X^T(x^{T-1}, \xi^T)} f^T(x^T, \xi^T)\right] \tag{28}$$

Gleichung (27) ist eine rekursive Verknüpfung der in Gleichung (28) dargestellten Formel. Diese kann mithilfe des Qualitätsprinzips von Bellmann gelöst werden. Dabei nutzt man aus, dass wenn eine optimale Lösung für die Kette von $t = T - t_n$ nach $t = \mathbf{T}$ gefunden wurde, eine Lösung für die Kette von $t = t_n - t_m$ nach $t = \mathbf{T}$ diese Teilkette enthalten muss. Es genügt daher, das Problem rekursiv zu lösen.

Um dieses Problem anzuwenden, werden die kontinuierlichen Variablen diskretisiert, sodass eine Formulierung der Gleichung (28) als Wahrscheinlichkeitsbaum möglich ist. Dieses Vorgehen stößt allerdings auf das Problem, das in der Literatur als "Curse of Dimensionality" bezeichnet wird: Um den Wahrscheinlichkeitsbaum zu charakterisieren, werden neben der Diskretisierung der Zustandsvariablen, auch die Übergangswahrscheinlichkeiten benötigt, dann in einem zweiten Schritt werden die verschiedenen Szenarien durchgespielt. Wird eine Zustandsvariable in N Werten diskretisiert, so müssen für die Berechnung der Wahrscheinlichkeiten von M Stufen $N^M$ unterschiedliche Szenarien bestimmt werden, was zu hohem Rechenaufwand führt. Entsprechend dem hier offenbarten Ausführungsbeispiel würde bei der Lösung des Problems für 24h, mit einer Auflösung von 1/4h, bereits $8^{24\times4}$ Szenarien analysiert werden müssen ($N = 8$, $M = 24 \times 4$). Aus diesem Grund werden bei der stochastischen Optimierung einige Vereinfachungen und Anpassungen vorgenommen.

Das in Gleichung (27) formulierte Problem wird durch zwei Näherungen gelöst, Es wird auf eine Aufstellung des Wahrscheinlichkeitsbaumes und der Berechnung der Wahrscheinlichkeiten verzichtet, stattdessen werden verschiedene Realisierungen über einen gewissen Zeitraum optimiert und deren Erwartungswert zur Bestimmung des optimalen Wertes für $x^t$ verwendet:

$$\max_{x^t \in X^t(y^t(\xi^t))} K^t(x^t, y^t(\xi^t)) + \mathbb{E}\left(\sum_{s=1}^{T} K^{t+s}(x^{t+s}, y^{t+s}(\xi^{t+s}))\right) \tag{29}$$

$y^t(\xi^t)$ stellt dabei die Randbedingungen aus Produktion, Verbrauch und den Energiepreisen dar. Für die Bestimmung von

$$\mathbb{E}\left(\sum_{s=0}^{T} K^{t+s}(x^{t+s}, y^{t+s}(\xi^{t+s}))\right)$$

werden nun N Zeitreihen ermittelt, die auf unterschiedlichen Realisationen von $y^t(\xi^t)$ basieren.

$$\max_{\tilde{x}\in\tilde{x}(y^\tau(\xi^\tau))} K^\tau(x^\tau, y^\tau(\xi^\tau)) + \frac{1}{N}\sum_{i=1}^{N}\sum_{s=1}^{T} K_i^{t+s}(x_i^{t+s}, y_i^{t+s}(\xi_i^{t+s})) \qquad (30)$$

Der Grundgedanke dabei ist, dass bei einer hinreichend großen Anzahl von beobachteten Realisationen die wahrscheinlichsten Zeitreihen den Erwartungswert prägen werden. Gleichung (30) kann erweitert werden, indem der Erwartungswert nicht über mehrere Realisationen bestimmt, sondern die Zeitreihe in mehrere Stufen unterteilt wird; so erhält man einen Mehrstufenprozess, der in ähnlicher Weise wie in Gleichung (28) gelöst werden kann.

Bei dem vorliegenden Ausführungsbeispiel wird auf die Anwendung eines Mehrstufenprozesses verzichtet. Stattdessen wird ein anderer Lösungsansatz verwendet. Die optimale Strategie besteht aus zwei Elementen: Kurzfristig müssen die lokalen Leistungs- und Energieflüsse ertragsoptimal eingestellt werden. Langfristig stellt sich die Frage, wie viel Speicher zukünftig benötigt wird und wie viel ertragsoptimal zwischengespeichert werden sollte.

Für die langfristigen Aspekte ist jedoch kein Detailwissen notwendig. Vor diesem Hintergrund ist es sinnvoll, die zukünftigen Leistungs- und Energieflüsse als Mittelwerte über größere Zeitintervalle zu betrachten. Die Gleichung (30) wird daher in zwei Bereiche unterteilt, die mit einer unterschiedlichen Zeitkonstante $\Delta t$ und $\Delta\hat{t}$ arbeiten.

Für die ersten M-Zeitschritte wird eine hohe zeitliche Auflösung $\Delta t$ verwendet. Für die darauffolgenden O-Zeitschritte wird eine geringere zeitliche Auflösung $\Delta\hat{t}$ verwendet, d.h.

$$\tilde{x} = \left\{ x^1, x^2, \dots, x^M, \hat{x}^{M+1}, \hat{x}^{M+2}, \dots, \hat{x}^{M+O} \right\} \qquad (31)$$

$$\tilde{y} = \left\{ y^1, y^2, \dots, y^M, \hat{y}^{M+1}, \hat{y}^{M+2}, \dots, \hat{y}^{M+O} \right\} \qquad (32)$$

Gleichung (30) enthält dann eine Lösung der Flussgleichungen, die auf zwei unterschiedlichen Zeitauflösungen arbeitet:

$$\max_{\tilde{x}\in\tilde{x}(\tilde{y}(\tilde{\xi}))} K^1(x^1, y^1) +$$
$$\frac{1}{N}\sum_{i=1}^{N}\left(\sum_{s=2}^{M} K_i^s(x_i^s, y_i^s(\xi_i^s)) + \sum_{s'=1}^{O} K_i^{M+s'}\left(\hat{x}_i^{M+s'}, \hat{y}_i^{M+s'}(\hat{\xi}_i^{M+s'})\right)\right)$$

$$(33)$$

$\tilde{x}(\tilde{y}(\tilde{\xi}))$ fasst in diesem Fall alle Nebenbedingungen und Flussgleichungen zusammen. In Analogie zur global optimierenden Betriebsführung wird eine Lösung des linearen Programms für N Realisierungen gelöst. Die aktuell anzuwendenden Leistungs- und Energieflüsse ergeben sich dann aus der Lösung $x^1$. Nur dieser Wert wird realisiert. Im darauffolgenden Zeitschritt wird das Verfahren wiederholt.

Da $\xi$ nicht bekannt ist, ist es notwendig, ein stochastisches Modell für die Produktion und für den Verbrauch zu verwenden. Vorzugsweise verwendet das Verfahren Modelle, deren Parameter aus Vergangenheitswerten abgeleitet sind, um N Realisationen der zukünftigen Produktions- und Verbrauchskurven zu realisieren, auf deren Basis dann die Optimierung erfolgt.

Für das vorliegende Ausführungsbeispiel wurden zwei heuristische Modellansätze erarbeitet, die für die Anwendung in der stochastisch optimierenden Betriebsführung beziehungsweise adaptiven Betriebsführung, geeignet sind. Die Ausgangsprämisse für die Verwendung dieser Ansätze ist die Vorgabe, dass ausschließlich Informationen aus der Vergangenheit verwendet wurden.

Die Fotovoltaik-Produktion, das heißt das Erzeugen von elektrischer Energie mithilfe eines Solargenerators, wird von Standort, Ausrichtung und Verschaltung ebenso beeinflusst, wie von den verwendeten Modulen. Die täglichen Wetterschwankungen, sowie der jahreszeitliche Lauf sorgen zudem für kurzzeitige Variationen der Solarproduktion.

Mittlerweile wurden Prognoseverfahren entwickelt, die auf Basis von Wetterdaten und Informationen über die Anlagenbeschaffenheit Aussagen über die zukünftige Produktion liefern. Für Aggregationen von Anlagen konnten gute Prognosen entwickeln werden. Es zeigt sich, dass die Prognose für einzelne Anlagen erheblich schwerer ist. Bei der Prognose der Solarstromproduktion von einzelnen Anlagen liegt der relative Prognosefehler bei ca. 40%.

Vorliegend wird die Dynamik der Fotovoltaik-Produktion durch die folgende Differenzialgleichung beschrieben:

$$d\frac{p^t}{dt} = \overline{(\Delta P^t)} + \xi^+\overline{(\Delta P)} - \xi^-(\Delta P) \qquad (34)$$

Dabei stellt $(\Delta P^t)$ die mittlere Änderung der Fotovoltaik-Produktion zum Zeitpunkt t dar. $\xi^+(\Delta P)$ und $\xi^-(\Delta P)$ repräsentieren stochastische Schwankungen, deren Verteilung bzgl. der Tageszeit und der Jahreszeit variiert.

$$\xi^{\pm}(\Delta P) = \xi^{\pm}_{t,d}(\Delta P) \tag{35}$$

Es wird angenommen, dass die Verteilung der Schwankungen einer Weibullverteilung genügt:

$$\xi^{\pm}_{t,d}(\Delta P) = f(\Delta P | a_{t,d}, b_{t,d}) = b_{t,d}\, a^{-b}_{t,d}\, \Delta P^{b_{t,d}-1} e^{-\left(\frac{\Delta P}{a_{t,d}}\right)^{b_{t,d}}} \tag{36}$$

Die Tages- und Jahreszeitabhängigkeit wird in Gleichung (36) durch die Anpassung der Koeffizienten realisiert. Um den Tages- und Nachtverlauf sicherzustellen, gilt weiterhin die Normierungsbedingung, dass sich die Schwankungen über 24 Stunden kompensieren müssen.

$$\forall d: \int_{s=0}^{s=24h} \int_{P'=0}^{\bar{P}'=\infty} \xi^-_{s,d}(P') dP' ds = \int_{s=0}^{s=24h} \int_{P'=0}^{P'=\infty} \xi^-_{s,d}(P') dP' ds \tag{37}$$

Vorliegend wird die Differentialgleichung aus Gleichung (34) mithilfe einer Euler-Integration gelöst:

$$P^{t+1} = P^t + \Delta t\, \Delta P^t \tag{38}$$

Für die Bestimmung der Verteilung der mittleren Produktionsänderung wird zunächst der Gradient ermittelt:

$$\Delta P(t, d) = \frac{P(t+\Delta t, d) - P(t, d)}{\Delta t} \tag{39}$$

Danach werden mithilfe eines laufenden Mittelwertes sowohl über die vergangenen Tage und die vergangenen Stunden die mittleren Produktionsänderunen bestimmt:

$$\langle \Delta P^t \rangle(t, d) = \int_{s=-\Delta t}^{s=0} \int_{l=-\Delta d}^{\bar{l}=0} \frac{\Delta P(t+s, d+l)}{\Delta t \Delta d} dl\, ds \tag{40}$$

Für die Bestimmung der Verteilungen der Schwankungen wird die in Gleichung (40) ermittelte mittlere Produktion von den vergangenen Werten subtrahiert, danach wird ein laufender Mittelwert über die vergangenen Werte berechnet, um künstliche Signalspitzen zu reduzierten.

$$\ddot{a}P(t, d) = \int_{s=-\Delta t}^{s=0} \int_{l=\Delta d}^{l=0} \frac{\Delta P(t+s, d+l) - \langle \Delta P \rangle(t+s, d+l)}{\Delta t \Delta d}\, ds\, dl \tag{41}$$

Aus diesem Datensatz werden innerhalb eines Fensters der Größe $\Delta t$, $\Delta d$ die Werte von $\delta P(t, d)$ dafür verwendet, die Weibull-Koeffizienten für $\xi^+(\Delta P)$ und $\xi^-(\Delta P)$ zu bestimmen. Dabei werden nur Vergangenheitswerte verwendet.

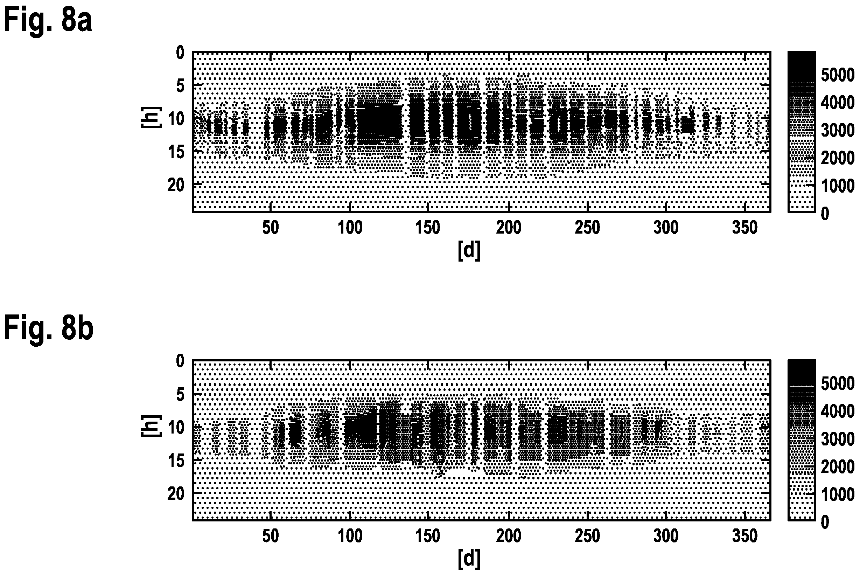

Fig. 8a und 8b zeigen je eine Darstellung einer Produktionskurve eines Solargenerators gemäß einem Ausführungsbeispiel der vorliegenden Erfindung. Dabei ist in Fig. 8a eine reale Produktion des Solargenerators gezeigt. In Fig. 8b wird diesem eine über das hier offenbarte Verfahren generierte prognostizierte Produktionskurve gegenübergestellt. Mit anderen Worten zeigt Fig. 8a eine reale Produktionskurve und Fig. 8b eine mithilfe des hier verwendeten Markov-Prozesses generierte Produktionskurve. In einem kartesischen Koordinatensystem sind auf der Abszisse Tage eines Jahres, von 0 bis 365 dargestellt. Die Ordinate zeigt die 24 Stunden eines Tages. Farbcodiert sind die Produktionsdaten entsprechend der Legende eingetragen. Fig. 8a und 8b zeigen den zeitlichen Verlauf einer realen Produktionskurve und die mithilfe des verwendeten Markov-Prozesses generierte Produktionskurve. Die generierte Produktionskurve in Fig. 8b weißt einen dynamischeren Verlauf auf. Fluktuationen sind häufiger und Perioden mit guter Fotovoltaik-Leistung nicht lang anhaltend. Die Grundstruktur der Produktionskurve ist dem Original ähnlich, obgleich für die gesamte Generierung zu jedem Zeitpunkt nur Vergangenheitswerte verwendet wurden.
Fig. 9 zeigt eine Darstellung eines Vergleichs eines Ertrags bei einer optimalen gegenüber einer adaptiven Betriebsführung gemäß einem Ausführungsbeispiel der vorliegenden Erfindung. In einem kartesischen Koordinatensystem ist auf der Abszisse die Zeit t in Stunden [h] und auf der Ordinate die Last in Watt [W]. Zwei Kurvenverläufe 900, 910 zeigen die reale Last 900 und die stochastisch ermittelte Last 910. Die stochastische Last 910 zeigt also eine Modellierung der Verbrauchskurve.

Lastprognosen werden typischerweise für eine Aggregation von Haushalten vorgenommen. Der Vorteil bei der Betrachtung von Aggregationen ist, dass sich Unterschiede im Verbrauchsverhalten einzelner Haushalte herausmitteln. Für diese weniger fluktuierenden Signale können dann Verfahren aus der Signalverarbeitung verwendet werden, wie beispielsweise ARMA-Filter. Für die Simulation einzelner Haushalte und daraus ableitbar für die Prognose des Verbrauchs können mit einem Verfahren die einzelnen Lasten im Haushalt mit einer Einschaltwahrscheinlichkeit versehen werden, woraus dann ein Lastprofil generiert wird. Für die Vorhersage des Verbrauches eines einzelnen Haushaltes existieren weitere Verfahren, die eine Genauigkeit von 5-10% .

Da meist keinerlei Informationen über die Haushalte vorliegen, wird ein einfacher Ansatz gewählt. Der Verbrauch wird in eine Grundlast $L_0$ und einem stochastischen Anteil $\Lambda_{t,d}(L)$, der von der Tageszeit t um dem Jahrestag d abhängt unterteilt.

$$L(t,d) = L_0 + \Lambda_{t,d}(L) \tag{42}$$

In Analogie zur Prognose der PV-Produktion wird eine Weibullverteilung unterstellt, deren Parameter taes- und jahreszeitabhängig sind:

$$\Lambda_{t,d}(L) = f(L|a_{t,d}, b_{t,d}) = b_{t,d}\, a_{t,d}^{-b_{t,d}} L^{b_{t,d}-1} e^{-\left(\frac{L}{a_{t,d}}\right)^{b_{t,d}}} \tag{43}$$

Für die Bestimmung der Koeffizienten werden Vergangenheitswerte verwendet. Die Stichproben werden aus einem Intervall aus +/-2 Stunden und - 7 gleichen Wochentagen entnommen. In Fig. 9 ist der reale Verbrauch an einem Tag einem simulierten Verbrauch gegenübergestellt. Die Grundlast kann aus den Vergangenheitswerten sehr gut abgeleitet werden. Die zeitlichen Variationen weisen hingegen stärkere Fluktuationen auf. Gleichzeitig sind sie aber in der Lage den Spitzenverbrauch bei 8:00 vorauszusagen. $\Lambda_{t,d}(L)$ kann nur positive Werte annehmen (Gleichung 0.38), daher wird die Reduzierung der Grundlast um 3:00- 4:00, sowie gegen 14:00 nicht korrekt abgebildet.

Mit den hier vorgestellten adaptiven Prognoseverfahren, kann adaptiv ermittelt werden und in die Betriebsführung integriert werden. $\xi$ wird auf der Zeitskala $\Delta t$ erzeugt. Um Werte für die zeitliche Auflösung auf der größeren Zeitskala $\Delta \tilde{t}$ zu erhalten, erfolgt ein Subsampling, d.h. es werden zunächst alle Werte von y im Zeitbereich von $\hat{x}$ gemittelt:

$$\hat{y}^i = \frac{1}{\Delta \tilde{t}} \int_{s=-\Delta \tilde{t}}^{0} y^{i+s}\, ds \tag{44}$$

Auch hier werden nur Werte aus der Vergangenheit verwendet.

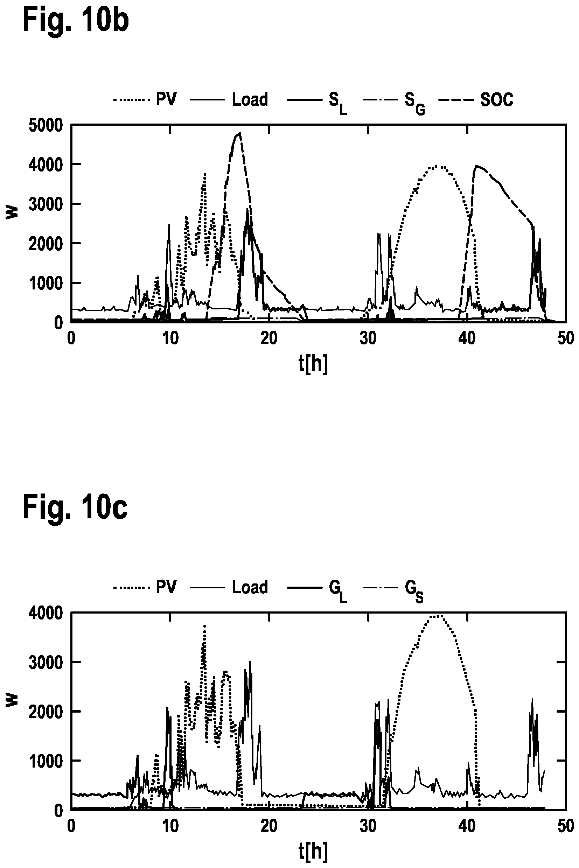

Fig. 10a bis 10c zeigen eine Darstellung von Kurvenverläufen von Energieflüssen bei Verwendung einer optimierenden Betriebsführung gemäß einem Ausführungsbeispiel der vorliegenden Erfindung. In einem kartesischen Koordinatensystem ist auf der Abszisse die Zeit in Stunden und auf der Ordinate die Leistung in Watt dargestellt. Dabei zeigt die Abszisse einen Zeitraum von zwei Tagen bzw. 50 h. Der Leistungsbereich erstreckt sich von 0 W bis 4000 W. Fig. 10a bis 10c zeigen den Leistungsfluss zwischen den einzelnen Komponenten eines Fotovoltaiksystems. Bei dem Fotovoltaiksystem kann es sich um ein Fotovoltaiksystem 100 gemäß einem Ausführungsbeispiel eines in den Figuren Fig. 1 bis Fig. 7 gezeigten Fotovoltaiksystems 100 handeln. Dabei zeigt Fig. 10a den Leistungsfluss von Generator aus, Fig. 10b zeigt den Leistungsfluss vom Speichersystem aus sowie Fig. 10c zeigt den Leistungsfluss vom Netzanschluss des Fotovoltaiksystems. In allen drei Figuren 8a bis 8c ist die vom Solargenerator erzeugte Leistung PV sowie die am Haushaltsanschluss von den Verbrauchern benötigte Last Load über die Zeit dargestellt.

Fig. 10a zeigt den Leistungsfluss $P_G$ vom Generator zum Netzanschluss, den Leistungsfluss $P_S$ vom Generator zum Speichersystem sowie den Leistungsfluss $P_L$ von Generator zum Haushalt.

Fig. 10b zeigt den Leistungsfluss $S_L$ vom Speichersystem zum Haushaltsanschluss, den Leistungsfluss $S_G$ vom Speichersystem zum Netzanschluss sowie die in dem Speichersystem gespeicherte Energie SOC.

Fig. 10c zeigt den Leistungsfluss $G_L$ vom Netzanschluss zum Haushaltsanschluss sowie den Leistungsfluss $G_S$ vom Netzanschluss zum Speichersystem.

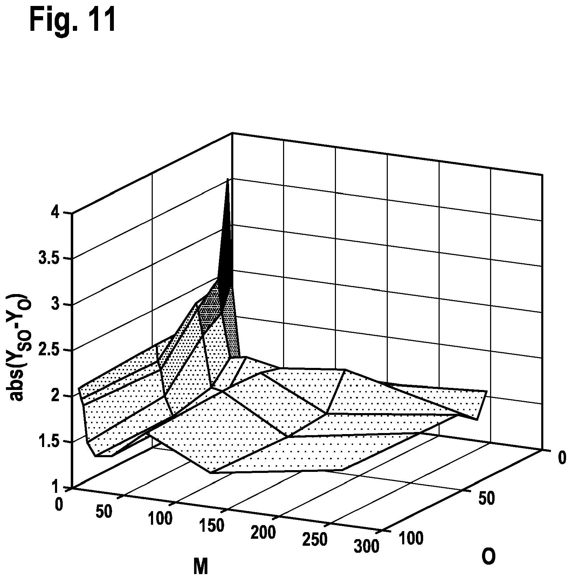

Fig. 10a bis 10c zeigen einen Tagesverlauf der stochastisch optimierenden Betriebsführung. Die Performanz des Verfahrens hängt weiterhin von der Wahl der Parameter M und O ab. In der folgenden Fig. 11 ist der Unterschied zwischen dem Ertrag der global optimierenden und der stochastisch optimierenden Betriebsführung dargestellt. M muss größer als 16 sein, was bei einer Auflösung von $\Delta t = \frac{1}{4}h$ einen Zeithorizont von 4 Stunden entspricht. O sollte hingegen größer als 4 sein. Dies entspricht einem Zeithorizont von $\hat{\Delta t} = 6h$.

Fig. 11 zeigt eine Darstellung von Kurvenverläufen von Energieflüssen bei Verwendung einer optimierenden Betriebsführung gemäß einem Ausführungsbeispiel der vorliegenden Erfindung. Es wird der Unterschied zwischen dem Ertrag der Lösung der stochastisch optimierenden Betriebsführung $Y_{SO}$ und der global optimierenden Betriebsführung $Y_O$ dargestellt. Für M>16 und O>4 wird der Fehler geringer.

Die stochastisch optimierende Betriebsführung ordnet der Batterie nur einen zukünftig, auf Basis der Prognose realisierbaren Gewinn als Wert zu und optimiert so die Betriebsführung. Dies hat zur Folge, dass Fehlprognosen sich direkt monetär auswirken können. Die lokal optimierende Betriebsführung löst dieses Problem dadurch, dass dem Speicher ein Wert zugeordnet wird. Der Speicherinhalt kann dann als Versicherung für eine Fehlprognose interpretiert werden. Die stochastisch optimierende Betriebsführung hat daher als weiteren Parameter die Sicherheitskapazität $K_g$. Die Kostenfunktion, die den Speicherfluss bewertet, lautet dann:

$$\gamma_6^t = -c_{gc}^t\left(\alpha\left(K_S - S_{SS}^{t-1}\right) + \kappa_{SS}\right) \tag{45}$$

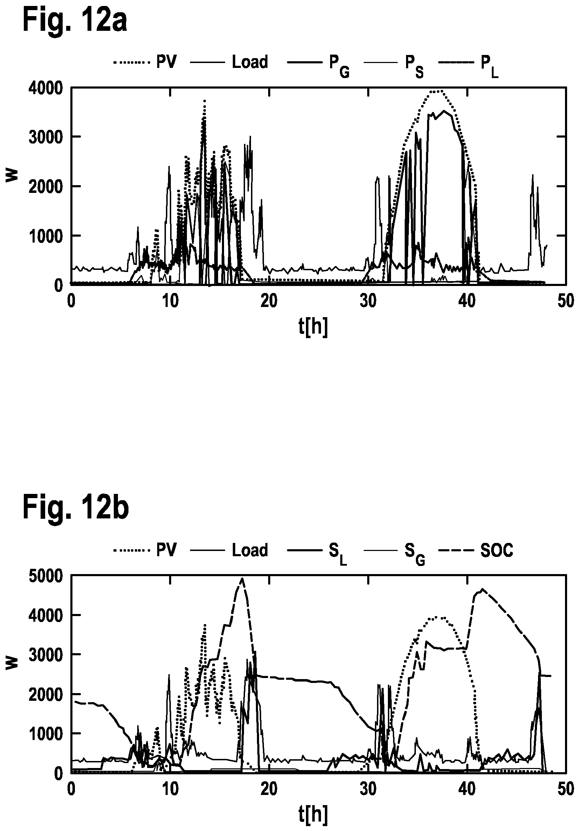

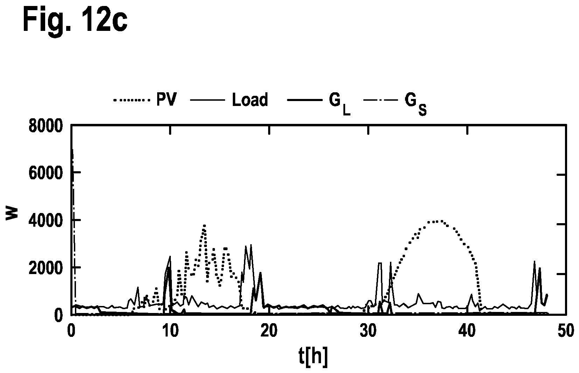

Sobald der Speicherinhalt größer als die Sicherheitskapazität ist, wird dies mit höheren Kosten bewertet, umgekehrt wird der Speicher wertvoller, sollte der Speicher noch nicht über die gewünschte Sicherheitskapazität verfügen, $\alpha$ dient dabei als Regelungsparameter, der die höheren Kosten beziffert. In Fig. 10a bis 10c wird mit einer Sicherheitskapazität von 0 gerechnet. In Fig. 12a bis 12c ist dieselbe Simulation mit einer Sicherheitskapazität von 2500Wh abgebildet. Diese Sicherheitskapazität ist so groß, dass am Anfang der Simulation Netzstrom zum Laden des Speichers genutzt wird. Weiterhin wird der Speicher deutlich geringer entladen. Die genaue Dimensionierung der Sicherheitskapazität hängt von dem jeweiligen Haushalt und der Tarifstruktur ab, kann allerdings adaptiv ermittelt werden.

Fig. 12a bis 12c zeigen eine Darstellung von Kurvenverläufen von Energieflüssen bei Verwendung einer optimierenden Betriebsführung gemäß einem Ausführungsbeispiel der vorliegenden Erfindung. Die Darstellung der Tagesverläufe der stochastisch optimierenden Betriebsführung entspricht weitgehend der Darstellung in Fig. 10a bis 10c, mit dem Unterschied, dass in dieser Simulation mit einer Sicherheitskapazität von 2500Wh gearbeitet wird. Deutlich ist die stärkere Nutzung der Batterie zu erkennen. Weiterhin wird am Anfang der Simulation Netzstrom zu laden der Batterie verwendet.

Die Stärke des Verfahrens ist insbesondere bei zeitlich variablen Tarifen zu erkennen.

Die Simulationen werden an vier unterschiedlichen Haushalten durchgeführt. Als Benchmark die eine global optimierende Betriebsführung (Optimal), die mit einer perfekten Prognose arbeitet. Zum Vergleich wird eine effizienzgesteuerte zeitlich lokal arbeitende Betriebsführung ebenfalls herangezogen. Diese kann als Erweiterung des Stands der Technik gesehen werden. Es ist zu erkennen, dass die stochastisch optimierende Betriebsführung nur 8-4% schlechter als die optimale Betriebsführung ist.

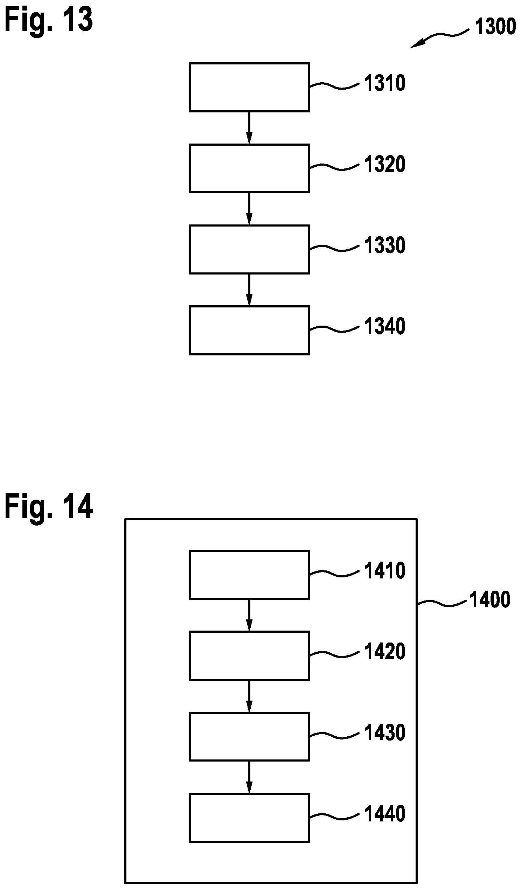

Fig. 13 zeigt ein Ablaufdiagramm eines Verfahrens 1300 gemäß einem Ausführungsbeispiel der vorliegenden Erfindung. Das Verfahren 1300 zur optimierenden Betriebsführung für ein Speichersystem für ein Fotovoltaiksystem umfasst in dem vorgestellten Ausführungsbeispiel vier Schritte. Das Verfahren 1300 kann in Zusammenhang mit einem Fotovoltaiksystem, welches ein Energie-Management-System, einen Solargenerator und ein Speichersystem sowie einen Haushaltsanschluss und einen Netzanschluss umfasst, ausgeführt werden. Das Verfahren 1300 umfasst einen Schritt 1310 des Einlesens von aktuellen Kenndaten des Fotovoltaiksystems und von vorangegangenen Kenndaten des Fotovoltaiksystems, einen Schritt 1320 des Erstellens einer Mehrzahl von Sätzen zukünftiger Kenndaten unter Verwendung eines stochastischen Modells, einen Schritt 1330 des Bestimmens einer Vielzahl möglicher Energieflüsse zwischen den Komponenten des Fotovoltaiksystems für das zumindest eine zukünftige Zeitintervall unter Verwendung der Mehrzahl von Sätzen zukünftiger Kenndaten und Bestimmen eines Erwartungswertes je Satz zukünftiger Kenndaten unter Verwendung eines Leistungsbedarfsparameters und der Vielzahl möglicher Energieflüsse sowie einen Schritt 1340 des Wählens eines Energieflusses aus der Vielzahl möglicher Energieflüsse für das zumindest eine zukünftige Zeitintervall, wobei eine Differenz des Erwartungswertes des Energieflusses und dem Mittelwert der Erwartungswerte der Vielzahl von Energieflüssen am kleinsten ist, wobei der Energiefluss die adaptive Betriebsführung bestimmt. Dabei repräsentieren die aktuellen Kenndaten Produktionswerte und/oder Verbrauchswerte und/oder einen Ladezustand des Speichersystems in einem aktuellen Zeitintervall, wobei die vorangegangenen Kenndaten Produktionswerte und/oder Verbrauchswerte und/oder einen Ladezustand in zumindest einem vorangegangenen Zeitintervall repräsentieren. Ein Satz der zukünftigen Kenndaten umfasst je einen erwarteten Produktionswert und/oder einen erwarteten Verbrauchswert für zumindest ein zukünftiges Zeitintervall, wobei den erwarteten Produktionswerten und/oder den erwarteten Verbrauchswerten je ein Wahrscheinlichkeitswert zugeordnet wird.

In einem Ausführungsbeispiel repräsentieren die Kenndaten eine am Solargenerator abrufbare Leistung $P_t$

und/oder eine in der Batterie gespeicherte Leistung und/oder von der Batterie abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, wobei die aktuellen Kenndaten Daten zu einem aktuellen und/oder vergangenen Zeitintervall und die erwarteten Kenndaten Daten zu einem zukünftigen Zeitintervall in dem Beobachtungszeitraum repräsentieren.

In einem Ausführungsbeispiel werden im Schritt des Bestimmens die erwarteten Leistungsflüsse unter Verwendung je eines einem erwarteten Leistungsfluss zuordenbaren Wirkungsgrad bestimmt.

In einem nicht gezeigten Ausführungsbeispiel weist das Verfahren 1300 einen Schritt des Ausgebens eines Steuersignals auf. Dabei ist das Steuersignal ausgebildet, den Energiefluss beziehungsweise den Leistungsfluss zwischen den Komponenten des Fotovoltaiksystems entsprechend dem im Schritt des Wählens gewählten Energieflusses zu steuern.

In einem Ausführungsbeispiel werden im Schritt des Einlesens die erwarteten Kenndaten von einer Prognoseeinheit eingelesen. Die Prognoseeinheit ist in einem Ausführungsbeispiel ein Teil des Energie-Management-Systems.

In einem Ausführungsbeispiel repräsentieren im Schritt des Einlesens die erwarteten Kenndaten Produktionsdaten und gleichzeitig oder alternativ Verbrauchswerte von einem ersten Zeitintervall und zumindest einem zeitlich dem ersten Zeitintervall nachfolgenden zweiten Zeitintervall innerhalb des vordefinierten Beobachtungszeitraums und gleichzeitig oder alternativ im Schritt des Bestimmens des bedarfsorientierten Leistungsflusses wird die Mehrzahl von erwarteten Leistungsflüssen für eine Mehrzahl von Zeitintervallen innerhalb des vordefinierten Beobachtungszeitraums bestimmt.

In einem Ausführungsbeispiel wird im Schritt des Bestimmens der Mehrzahl von erwarteten Leistungsflüssen für eine Mehrzahl von Zeitintervallen in dem Beobachtungszeitraum bestimmt.

In einem Ausführungsbeispiel wird im Schritt 1330 des Bestimmens die Vielzahl möglicher Energieflüsse unter Verwendung je eines einem Energiefluss zuordenbaren Wirkungsgrades bestimmt.

In einem Ausführungsbeispiel werden der Schritt 1320 des Erstellens, der Schritt 1330 des Bestimmens und der Schritt 1340 des Wählens zumindest ein zweites Mal ausgeführt, um für zumindest ein weiteres zukünftiges Zeitintervall die adaptive Betriebsführung zu bestimmen.

In einem Ausführungsbeispiel werden der Schritt 1320 des Erstellens, der Schritt 1330 des Bestimmens und der Schritt 1340 des Wählens mehrmalig ausgeführt, um für eine Vielzahl zukünftiger Zeitintervalle die adaptive Betriebsführung zu bestimmen, wobei ein erster Teil der Vielzahl zukünftiger Zeitintervalle je eine erste Dauer und ein zweiter Teil der Vielzahl zukünftiger Zeitintervalle je eine zweite von der ersten Dauer abweichende Dauer aufweisen.

In einem Ausführungsbeispiel wird im Schritt 1340 des Wählens des Energieflusses und/oder der adaptiven Betriebsführung ein Energiefluss zwischen den Komponenten des Fotovoltaiksystems für das zugeordnete Zeitintervall bestimmt.

Ein Aspekt des erfindungsgemäßen Verfahrens ist konzeptionell auf die Verwendung in Fotovoltaik-Speichersystemen ausgerichtet. Die verwendete Methodik kann allerdings problemlos auf Anwendungen übertragen werden, in denen Leistungs- und Energieflüsse nach Kostengesichtspunkten oder alternativ bedarfsorientiert in Echtzeit kontrolliert werden.

Das Verfahren kann mit anderen Worten zusammenfassend dargestellt werden: Set

ze $y^t = \left( \tilde{P}^t, \tilde{L}^t, c_{in}^t, c_{gc}^t \right),$ wobei $\tilde{P}^t$ und $\tilde{L}^t$ die aktuellen, realen Werte sind.

Realisiere N Produktions- und Verbrauchsverläufe auf Basis der stochastischen Modelle.

Ermittel $\hat{y}$ nach Gleichung (44).

Löse für jede Realisierung das Optimierungsproblem entsprechend Gleichung (33).

Bilde den Erwartungswert aus den Erträgen der N Realisationen.

Wähle $x^t$ aus der Realisierung, dessen Erwartungswert dem Mittelwert am nächsten ist.

Inkrementiere die Zeit: $t \rightarrow t + \Delta t$

Wiederholen der vorangegangenen Schritte, bis die Simulation beendet ist.

Fig. 14 zeigt ein Blockschaltbild einer Vorrichtung 1400 gemäß einem Ausführungsbeispiel der vorliegenden Erfindung. Die Vorrichtung 1400 ist ausgebildet, die Schritte eines Ausführungsbeispiels des in Fig. 13 beschriebenen Verfahrens in entsprechenden Einrichtungen durchzuführen. Die Vorrichtung kann mit einem Ausführungsbeispiel eines Fotovoltaiksystems, wie es in den Figuren Fig. 1 bis 7 beschrieben ist, eingesetzt werden. Dabei umfasst die Vorrichtung eine Schnittstelle 1410 beziehungsweise eine Einrichtung 1410 zum Einlesen von aktuellen Kenndaten des Fotovoltaiksystems und von vorangegangenen Kenndaten des Fotovoltaiksystems, wobei die aktuellen Kenndaten Produktionswerte und/oder Verbrauchswerte und/oder einen Ladezustand des Speichersystems in einem aktuellen Zeitintervall repräsentieren, wobei die vorangegangenen Kenndaten Produktionswerte und/oder Verbrauchswerte und/oder einen Ladezustand in zumindest einem vorangegangenen Zeitintervall repräsentieren. Weiterhin umfasst die Vorrichtung 1400 eine Einrichtung 1420 des Erstellens einer Mehrzahl von Sätzen zukünftiger Kenndaten unter Verwendung eines sto-

**EP 3 072 201 B1**

chastischen Modells, wobei ein Satz der zukünftigen Kenndaten je einen erwarteten Produktionswert und/oder einen erwarteten Verbrauchswert für zumindest ein zukünftiges Zeitintervall umfasst, wobei den erwarteten Produktionswerten und/oder den erwarteten Verbrauchswerten je ein Wahrscheinlichkeitswert zugeordnet wird. Weiterhin umfasst die Vorrichtung 1400 eine Einrichtung zum Bestimmen einer Vielzahl möglicher Energieflüsse zwischen den Komponenten des Fotovoltaiksystems für das zumindest eine zukünftige Zeitintervall unter Verwendung der Mehrzahl von Sätzen zukünftiger Kenndaten und Bestimmen eines Erwartungswertes je Satz zukünftiger Kenndaten unter Verwendung eines Leistungsbedarfsparameters und der Vielzahl möglicher Energieflüsse. Weiterhin weist die Vorrichtung 1400 eine Einrichtung 1440 zum Wählen eines Energieflusses aus der Vielzahl möglicher Energieflüsse für das zumindest eine zukünftige Zeitintervall auf, wobei eine Differenz des Erwartungswertes des Energieflusses und dem Mittelwert der Erwartungswerte der Vielzahl von Energieflüssen am kleinsten ist, wobei der Energiefluss die adaptive Betriebsführung bestimmt.

In einem Ausführungsbeispiel umfasst die Vorrichtung 1400 eine optionale Schnittstelle zum Ausgeben eines Steuersignals, wobei das Steuersignal ausgebildet ist, den Energiefluss zwischen den Komponenten des Fotovoltaiksystems entsprechend dem im in der Einrichtung 1440 des Wählens gewählten Energieflusses zu steuern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (1300) zur adaptiven Betriebsführung für ein Speichersystem (104) für ein Fotovoltaiksystem (100), wobei das Fotovoltaiksystem (100) als Komponenten zumindest einen Solargenerator (102), das Speichersystem (104), ein Energie-Management-System (116) sowie einen Haushaltsanschluss (106) und einen Netzanschluss (108) umfasst, wobei das Verfahren (1300) die folgenden Schritte aufweist:

   Einlesen (1310) von aktuellen Kenndaten des Fotovoltaiksystems (100) und von vorangegangenen Kenndaten des Fotovoltaiksystems (100), wobei die aktuellen Kenndaten Produktionswerte und/oder Verbrauchswerte und/oder einen Ladezustand (122) des Speichersystems (104) in einem aktuellen Zeitintervall repräsentieren, wobei die vorangegangenen Kenndaten Produktionswerte und/oder Verbrauchswerte und/oder einen Ladezustand (122) in zumindest einem vorangegangenen Zeitintervall repräsentieren;
   Erstellen (1320) einer Mehrzahl von Sätzen zukünftiger Kenndaten unter Verwendung eines stochastischen Modells, wobei ein Satz der zukünftigen Kenndaten je einen erwarteten Produktionswert und/oder einen erwarteten Verbrauchswert für zumindest ein zukünftiges Zeitintervall umfasst, wobei den erwarteten Produktionswerten und/oder den erwarteten Verbrauchswerten je ein Wahrscheinlichkeitswert zugeordnet wird;
   Bestimmen (1330) einer Vielzahl möglicher Energieflüsse (114) zwischen den Komponenten des Fotovoltaiksystems (100) für das zumindest eine zukünftige Zeitintervall unter Verwendung der Mehrzahl von Sätzen zukünftiger Kenndaten und Bestimmen eines Erwartungswertes je Satz zukünftiger Kenndaten unter Verwendung eines Leistungsbedarfsparameters und der Vielzahl möglicher Energieflüsse (114); und
   Wählen (1340) eines Energieflusses (114) aus der Vielzahl möglicher Energieflüsse (114) für das zumindest eine zukünftige Zeitintervall, wobei eine Differenz des Erwartungswertes des Energieflusses (114) und dem Mittelwert der Erwartungswerte der Vielzahl von Energieflüssen (114) am kleinsten ist, wobei der Energiefluss (114) die adaptive Betriebsführung bestimmt.

2. Verfahren (1300) gemäß Anspruch 1, bei dem die Kenndaten eine am Solargenerator (102) abrufbare Leistung $P_t$ und/oder eine in dem Speichersystem (104) gespeicherte Leistung und/oder von dem Speichersysrtem (104) abrufbare Leitung $S_t$ und/oder eine zur Versorgung der Verbraucher benötigte Leistung $L_t$ und/oder eine Leistung $G_t$, die in ein Netz (108) eingespeist oder aus dem Netz (108) abgerufen wird, repräsentieren, wobei die aktuellen Kenndaten Daten zu einem aktuellen Zeitintervall und die vorangegangenen Kenndaten von zumindest einem vorangegangenen Zeitintervall repräsentieren.

3. Verfahren (1300) gemäß einem der vorangegangenen Ansprüche, bei dem im Schritt (1330) des Bestimmens die

# EP 3 072 201 B1

Vielzahl möglicher Energieflüsse (114) unter Verwendung je eines einem Energiefluss (114) zuordenbaren Wirkungsgrades bestimmt wird.

4. Verfahren (1300) gemäß einem der vorangegangenen Ansprüche, bei dem der Schritt (1320) des Erstellens, der Schritt (1330) des Bestimmens und der Schritt (1340) des Wählens zumindest ein zweites Mal ausgeführt werden, um für zumindest ein weiteres zukünftiges Zeitintervall die adaptive Betriebsführung zu bestimmen.

5. Verfahren (1300) gemäß Anspruch 4, bei dem der Schritt (1320) des Erstellens, der Schritt (1330) des Bestimmens und der Schritt (1340) des Wählens mehrmalig ausgeführt werden, um für eine Vielzahl zukünftiger Zeitintervalle die adaptive Betriebsführung zu bestimmen, wobei ein erster Teil der Vielzahl zukünftiger Zeitintervalle je eine erste Dauer und ein zweiter Teil der Vielzahl zukünftiger Zeitintervalle je eine zweite von der ersten Dauer abweichende Dauer aufweisen.

6. Verfahren (1300) gemäß einem der vorangegangenen Ansprüche, mit einem Schritt des Ausgebens eines Steuersignals, wobei das Steuersignal ausgebildet ist, den Energiefluss zwischen den Komponenten des Fotovoltaiksystems (100) entsprechend dem im Schritt (1340) des Wählens gewählten Energieflusses zu steuern.

7. Verfahren (1300) gemäß einem der vorangegangenen Ansprüche, bei dem im Schritt (1340) des Wählens des Energieflusses und/oder der adaptiven Betriebsführung ein Energiefluss zwischen den Komponenten des Fotovoltaiksystems für das zugeordnete Zeitintervall bestimmt wird.

8. Vorrichtung (1400), die ausgebildet ist, um die Schritte eines Verfahrens gemäß einem der Ansprüche 1 bis 7 in entsprechenden Einrichtungen durchzuführen, wobei die Vorrichtung (1400) die folgenden Einrichtungen umfasst:

eine Schnittstelle (1410) zum Einlesen von aktuellen Kenndaten des Fotovoltaiksystems (100) und von vorangegangenen Kenndaten des Fotovoltaiksystems (100), wobei die aktuellen Kenndaten Produktionswerte und/oder Verbrauchswerte und/oder einen Ladezustand (122) des Speichersystems (104) in einem aktuellen Zeitintervall repräsentieren, wobei die vorangegangenen Kenndaten Produktionswerte und/oder Verbrauchswerte und/oder einen Ladezustand in zumindest einem vorangegangenen Zeitintervall repräsentieren; **gekennzeichnet durch** eine Einrichtung (1420) zum Erstellen einer Mehrzahl von Sätzen zukünftiger Kenndaten unter Verwendung eines stochastischen Modells, wobei ein Satz der zukünftigen Kenndaten je einen erwarteten Produktionswert und/oder einen erwarteten Verbrauchswert für zumindest ein zukünftiges Zeitintervall umfasst, wobei den erwarteten Produktionswerten und/oder den erwarteten Verbrauchswerten je ein Wahrscheinlichkeitswert zugeordnet wird;
eine Einrichtung (1430) zum Bestimmen einer Vielzahl möglicher Energieflüsse (114) zwischen den Komponenten des Fotovoltaiksystems (104) für das zumindest eine zukünftige Zeitintervall unter Verwendung der Mehrzahl von Sätzen zukünftiger Kenndaten und Bestimmen eines Erwartungswertes je Satz zukünftiger Kenndaten unter Verwendung eines Leistungsbedarfsparameters und der Vielzahl möglicher Energieflüsse; und
eine Einrichtung (1440) zum Wählen eines Energieflusses (114) aus der Vielzahl möglicher Energieflüsse (114) für das zumindest eine zukünftige Zeitintervall, wobei eine Differenz des Erwartungswertes des Energieflusses (114) und dem Mittelwert der Erwartungswerte der Vielzahl von Energieflüssen (114) am kleinsten ist, wobei der Energiefluss (114) die adaptive Betriebsführung bestimmt.

9. Fotovoltaiksystem (100) mit einem Solargenerator (102) und/oder einem Speichersystem (104) und/oder einem Energie-Management-System (116) und einer Vorrichtung gemäß Anspruch 8 zur adaptiven Betriebsführung für das Speichersystem (104).

10. Computer-Programmprodukt mit Programmcode zur Durchführung des Verfahrens nach einem der Ansprüche 1 bis 7, wenn das Programmprodukt auf einer Vorrichtung (1400) ausgeführt wird.

**Claims**

1. Method (1300) for adaptive operational management for a storage system (104) for a photovoltaic system (100), wherein the photovoltaic system (100) comprises, as components, at least one solar generator (102), the storage system (104), an energy management system (116) and a household connection (106) and a network connection (108), wherein the method (1300) has the following steps of:

reading in (1310) current characteristic data relating to the photovoltaic system (100) and previous characteristic data relating to the photovoltaic system (100), wherein the current characteristic data represent production values and/or consumption values and/or a state of charge (122) of the storage system (104) in a current interval of time, wherein the previous characteristic data represent production values and/or consumption values and/or a state of charge (122) in at least one previous interval of time;

creating (1320) a plurality of sets of future characteristic data using a stochastic model, wherein a set of future characteristic data each comprises an expected production value and/or an expected consumption value for at least one future interval of time, wherein a probability value is assigned to each of the expected production values and/or the expected consumption values;

determining (1330) a multiplicity of possible energy flows (114) between the components of the photovoltaic system (100) for the at least one future interval of time using the plurality of sets of future characteristic data and determining an expected value for each set of future characteristic data using a power requirement parameter and the multiplicity of possible energy flows (114); and

selecting (1340) an energy flow (114) from the multiplicity of possible energy flows (114) for the at least one future interval of time, wherein a difference between the expected value of the energy flow (114) and the average value of the expected values of the multiplicity of energy flows (114) is the smallest, wherein the energy flow (114) determines the adaptive operational management.

2. Method (1300) according to Claim 1, in which the characteristic data represent a power $P_t$ which can be obtained at the solar generator (102) and/or a power which is stored in the storage system (104) and/or power $S_t$ which can be obtained from the storage system (104) and/or a power $L_t$ needed to supply the loads and/or a power $G_t$ which is fed into a network (108) or is obtained from the network (108), wherein the current characteristic data represent data for a current interval of time and the previous characteristic data represent from at least one previous interval of time.

3. Method (1300) according to one of the preceding claims, in which, in the determining step (1330), the multiplicity of possible energy flows (114) are determined using an efficiency which can be assigned to each energy flow (114).

4. Method (1300) according to one of the preceding claims, in which the creating step (1320), the determining step (1330) and the selecting step (1340) are carried out at least a second time in order to determine the adaptive operational management for at least one further future interval of time.

5. Method (1300) according to Claim 4, in which the creating step (1320), the determining step (1330) and the selecting step (1340) are carried out several times in order to determine the adaptive operational management for a multiplicity of future intervals of time, wherein a first part of the multiplicity of future intervals of time has a first duration and a second part of the multiplicity of future intervals of time has a second duration differing from the first duration.

6. Method (1300) according to one of the preceding claims, having a step of outputting a control signal, wherein the control signal is designed to control the energy flow between the components of the photovoltaic system (100) according to the energy flow selected in the selecting step (1340).

7. Method (1300) according to one of the preceding claims, in which, in the step (1340) of selecting the energy flow and/or the adaptive operational management, an energy flow between the components of the photovoltaic system is determined for the assigned interval of time.

8. Apparatus (1400) which is designed to carry out the steps of a method according to one of Claims 1 to 7 in corresponding devices, wherein the apparatus (1400) comprises the following devices:

an interface (1410) for reading in current characteristic data relating to the photovoltaic system (100) and previous characteristic data relating to the photovoltaic system (100), wherein the current characteristic data represent production values and/or consumption values and/or a state of charge (122) of the storage system (104) in a current interval of time, wherein the previous characteristic data represent production values and/or consumption values and/or a state of charge in at least one previous interval of time;

**characterized by**

a device (1420) for creating a plurality of sets of future characteristic data using a stochastic model, wherein a set of future characteristic data each comprises an expected production value and/or an expected consumption value for at least one future interval of time, wherein a probability value is assigned to each of the expected production values and/or the expected consumption values;

a device (1430) for determining a multiplicity of possible energy flows (114) between the components of the photovoltaic system (104) for the at least one future interval of time using the plurality of sets of future characteristic data and determining an expected value for each set of future characteristic data using a power requirement parameter and the multiplicity of possible energy flows; and

a device (1440) for selecting an energy flow (114) from the multiplicity of possible energy flows (114) for the at least one future interval of time, wherein a difference between the expected value of the energy flow (114) and the average value of the expected values of the multiplicity of energy flows (114) is the smallest, wherein the energy flow (114) determines the adaptive operational management.

9.  Photovoltaic system (100) having a solar generator (102) and/or a storage system (104) and/or an energy management system (116) and an apparatus according to Claim 8 for adaptive operational management for the storage system (104).

10. Computer program product having program code for carrying out the method according to one of Claims 1 to 7 when the program product is executed on an apparatus (1400).


## Revendications

1.  Procédé (1300) de gestion d'exploitation adaptative pour un système accumulateur (104) pour un système photovoltaïque (100), le système photovoltaïque (100) comportant comme composants au moins un générateur solaire (102), le système accumulateur (104), un système de gestion d'énergie (116) ainsi qu'un branchement domestique (106) et un branchement au réseau (108), le procédé (1300) comprenant les étapes suivantes :

    lecture (1310) de données caractéristiques actuelles du système photovoltaïque (100) et de données caractéristiques précédentes du système photovoltaïque (100), les données caractéristiques actuelles représentant des valeurs de production et/ou des valeurs de consommation et/ou un état de charge (122) du système accumulateur (104) dans un intervalle de temps actuel, les données caractéristiques précédentes représentant des valeurs de production et/ou des valeurs de consommation et/ou un état de charge (122) dans au moins un intervalle de temps précédent ;
    création (1320) d'une pluralité de jeux de données caractéristiques futures en utilisant un modèle stochastique, un jeu de données caractéristiques futures comprenant respectivement une valeur de production attendue et/ou une valeur de consommation attendue pour au moins un intervalle de temps futur, une valeur de probabilité étant respectivement associée aux valeurs de production attendues et/ou aux valeurs de consommation attendues ;
    détermination (1330) d'une pluralité de flux d'énergie (114) possibles entre les composants du système photovoltaïque (100) pour l'au moins un intervalle de temps futur en utilisant la pluralité de jeux de données caractéristiques futures et détermination d'une valeur attendue par jeu de données caractéristiques futures en utilisant un paramètre de besoin en puissance et la pluralité de flux d'énergie (114) possibles ; et
    sélection (1340) d'un flux d'énergie (114) parmi la pluralité de flux d'énergie (114) possibles pour l'au moins un intervalle de temps futur, une différence entre la valeur attendue du flux d'énergie (114) et la valeur moyenne des valeurs attendues de la pluralité de flux d'énergie (114) étant la plus petite, le flux d'énergie (114) déterminant la gestion d'exploitation adaptative.

2.  Procédé (1300) selon la revendication 1, selon lequel les données caractéristiques représentant une puissance $P_t$ pouvant être prélevée au niveau du générateur solaire (102) et/ou une puissance stockée dans le système accumulateur (104) et/ou une puissance $S_t$ pouvant être prélevée du système accumulateur (104) et/ou une puissance $L_t$ nécessaire pour alimenter les récepteurs et/ou une puissance $G_t$ qui est injectée dans un réseau (108) ou prélevée du réseau (108), les données caractéristiques actuelles représentant des données à propos d'un intervalle de temps actuel et les données caractéristiques précédentes représentant d'au moins un intervalle de temps précédent.

3.  Procédé (1300) selon l'une des revendications précédentes, selon lequel, à l'étape (1330) de détermination, la pluralité de flux d'énergie (114) possibles est déterminée en utilisant respectivement un taux de rendement qui peut être associé à un flux d'énergie (114).

4.  Procédé (1300) selon l'une des revendications précédentes, selon lequel l'étape (1320) de création, l'étape (1330) de détermination et l'étape (1340) de sélection sont exécutées au moins une deuxième fois afin de déterminer la gestion d'exploitation adaptative pour au moins un intervalle de temps futur supplémentaire.

**5.** Procédé (1300) selon la revendication 4, selon lequel l'étape (1320) de création, l'étape (1330) de détermination et l'étape (1340) de sélection sont exécutées plusieurs fois afin de déterminer la gestion d'exploitation adaptative pour une pluralité d'intervalles de temps futurs, une première partie de la pluralité d'intervalles de temps futurs présentant respectivement une première durée et une deuxième partie de la pluralité d'intervalles de temps futurs présentant respectivement une deuxième durée différente de la première durée.

**6.** Procédé (1300) selon l'une des revendications précédentes, comprenant une étape de délivrance d'un signal de commande, le signal de commande étant configuré pour commander le flux d'énergie entre les composants du système photovoltaïque (100) conformément au flux d'énergie sélectionné à l'étape (1340) de sélection.

**7.** Procédé (1300) selon l'une des revendications précédentes, selon lequel un flux d'énergie entre les composants du système photovoltaïque est déterminé pour l'intervalle de temps associé à l'étape (1340) de sélection du flux d'énergie et/ou de gestion d'exploitation adaptative.

**8.** Arrangement (1400) qui est configuré pour exécuter les étapes d'un procédé selon l'une des revendications 1 à 7 dans des dispositifs correspondants, l'arrangement (1400) comprenant les dispositifs suivants :

une interface (1410) destinée à la lecture de données caractéristiques actuelles du système photovoltaïque (100) et de données caractéristiques précédentes du système photovoltaïque (100), les données caractéristiques actuelles représentant des valeurs de production et/ou des valeurs de consommation et/ou un état de charge (122) du système accumulateur (104) dans un intervalle de temps actuel, les données caractéristiques précédentes représentant des valeurs de production et/ou des valeurs de consommation et/ou un état de charge dans au moins un intervalle de temps précédent ;
**caractérisé par**
un dispositif (1420) destiné à la création d'une pluralité de jeux de données caractéristiques futures en utilisant un modèle stochastique, un jeu de données caractéristiques futures comprenant respectivement une valeur de production attendue et/ou une valeur de consommation attendue pour au moins un intervalle de temps futur, une valeur de probabilité étant respectivement associée aux valeurs de production attendues et/ou aux valeurs de consommation attendues ;
un dispositif (1430) destiné à la détermination d'une pluralité de flux d'énergie (114) possibles entre les composants du système photovoltaïque (104) pour l'au moins un intervalle de temps futur en utilisant la pluralité de jeux de données caractéristiques futures et à la détermination d'une valeur attendue par jeu de données caractéristiques futures en utilisant un paramètre de besoin en puissance et la pluralité de flux d'énergie possibles ; et
un dispositif (1440) destiné à la sélection d'un flux d'énergie (114) parmi la pluralité de flux d'énergie (114) possibles pour l'au moins un intervalle de temps futur, une différence entre la valeur attendue du flux d'énergie (114) et la valeur moyenne des valeurs attendues de la pluralité de flux d'énergie (114) étant la plus petite, le flux d'énergie (114) déterminant la gestion d'exploitation adaptative.

**9.** Système photovoltaïque (100) comprenant un générateur solaire (102) et/ou un système accumulateur (104) et/ou un système de gestion d'énergie (116) et un arrangement selon la revendication 8 destiné à la gestion d'exploitation adaptative du système accumulateur (104).

**10.** Produit de programme informatique comprenant un code de programme destiné à mettre en oeuvre le procédé selon l'une des revendications 1 à 7 lorsque le produit de programme est exécuté sur un arrangement (1400).

# Fig. 1

# Fig. 2

EP 3 072 201 B1

# Fig. 3a

# Fig. 3b

24

# Fig. 4

## Fig. 5a

## Fig. 5b

**Fig. 5c**

**Fig. 5d**

# Fig. 6

# Fig. 7

## Fig. 8a

## Fig. 8b

## Fig. 9

## Fig. 10a

# Fig. 10b

# Fig. 10c

# Fig. 11

## Fig. 12a

## Fig. 12b

# Fig. 12c

**Fig. 13**

1300

1310

1320

1330

1340

**Fig. 14**

1410

1420

1430

1440

1400

**IN DER BESCHREIBUNG AUFGEFÜHRTE DOKUMENTE**

**In der Beschreibung aufgeführte Patentdokumente**

- DE 102009040090 A1

**In der Beschreibung aufgeführte Nicht-Patentliteratur**

- **A. U. SCHMIEGEL ; A. LINHART EINE.** *Proceedings of the 16th Kassel symposium energy systems technology,* 2011